# EUROPÄISCHE PATENTANMELDUNG

(11) **EP 4 234 964 A2**
(43) Veröffentlichungstag der Anmeldung: **30.08.2023**
(21) Anmeldenummer: 23170061.8
(22) Anmeldetag: 06.05.2020
(51) Int. Cl.: F16C 33/12

(54) **MEHRSCHICHTGLEITLAGERELEMENT**

(30) Priorität: 07.05.2019 AT 504122019
(62) Teilanmeldung aus: 20173232.8
(71) Anmelder: Miba Gleitlager Austria GmbH, 4663 Laakirchen (AT)
(72) Erfinder: EBERHARD, Alexander, 4816 Gschwandt (AT); SCHINAGL, Matthias, 4020 Linz (AT)
(74) Vertreter: Burger, Hannes

(57) **Zusammenfassung**

Die Erfindung betrifft ein Mehrschichtgleitlagerelement (1) aus einem Verbundwerkstoff umfassend eine Stützmetallschicht (3) und eine weitere Schicht (4) aus einer Gusslegierung aus einer bleifreien Kupferbasislegierung, in der sulfidische Ausscheidungen (10) enthalten sind, wobei die Kupferbasislegierung zwischen 0,1 Gew.-% und 3 Gew.-% Schwefel, zwischen 0,01 Gew.-% und 4 Gew.-% Eisen, bis zu 2 Gew.-% Phosphor, zumindest ein Element aus einer ersten Gruppe bestehend aus Zink, Zinn, Aluminium, Mangan, Nickel, Silizium, Chrom, Indium von in Summe zwischen 0,1 Gew.-% und 49 Gew.-% und zumindest ein Element aus einer zweiten Gruppe bestehend aus Silber, Magnesium, Indium, Kobalt, Titan, Zirkonium, Arsen, Lithium, Yttrium, Calcium, Vanadium, Molybdän, Wolfram, Antimon, Selen, Tellur, Bismut, Niob, Palladium, wobei der Summenanteil der Elemente der zweiten Gruppe zwischen 0 Gew.-% und 2 Gew.-% beträgt, enthält und den Rest Kupfer bildet.

## Beschreibung

Die Erfindung betrifft ein Mehrschichtgleitlagerelement aus einem Verbundwerkstoff umfassend eine Stützmetallschicht und eine weitere Schicht, insbesondere eine Gleitschicht, sowie gegebenenfalls eine Zwischenschicht zwischen der Stützmetallschicht und der weiteren Schicht, wobei die weitere Schicht aus einer Gusslegierung aus einer bleifreien Kupferbasislegierung gebildet ist, in der sulfidische Ausscheidungen enthalten sind.

Bleibronzen werden seit langem in Mehrschichtgleitlagern aus einem Verbund-werkstoff umfassend eine Stützmetallschicht und eine Gleitschicht für die Motorenindustrie eingesetzt, da sie durch die Bleiausscheidungen ein gutmütiges tribologisches Verhalten aufweisen. Darüber hinaus ist deren gießtechnische Herstellung aus prozesstechnischer Sicht sehr robust, da die metallurgischen Phänomene der Mikroseigerung und der damit verbundenen Lunkerbildung durch das Blei verhindert oder ausgeglichen werden. Aus ökologischen Gründen sollen bleihaltige Bronzen jedoch vermieden werden. Es gibt dazu bereits verschiedene Ansätze von Gleitschichtlegierungen im Stand der Technik. So wird beispielsweise bei Gusslegierungen auf Basis von Messing oder Bronzen mit Hilfe von Legierungszusätzen, wie z.B. Chrom, Mangan, Zirkonium oder Aluminium, versucht, die Reibungseigenschaften zu verbessern und im Speziellen die Fressneigung zu verringern.

Die Verwendung von Schwefel in Kupferlegierungen ist in mehreren Druckschriften bereits beschrieben worden, wie z.B. der WO 2010/137483 A1, der US2012082588 A1, der US 2012/121455 A1, DE 20 2016 101 661 U1 oder der WO 2007/126006 A1. Schwefel wird dabei vorwiegend zur Verbesserung der Zerspanungseigenschaften von Rotgusslegierungen (CuSnZn-Matrix) eingesetzt. Weiters wird von verbesserten tribologischen Eigenschaften in diesen Schriften berichtet. Die grundlegende Eigenschaft der erwähnten Rotgusslegierungen, auch in Kombination mit weiteren Legierungselementen, ein breites Erstarrungsintervall zu besitzen, beeinträchtigt deren Verwendung jedoch in mehreren Punkten. Insbesondere ist die Gussqualität ein Problem. Das ausgedehnte Erstarrungsintervall von z.B. ca. 150°C bei der Legierung CuSn7Zn2 bedingt eine ausgeprägte Schrumpfungsporosität, welche vor allem bei der Verwendung als Gusslegierung Fehlstellen im Material mit sich zieht. Bei niedrigen Zinngehalten liegt zusätzlich ein erhöhter Dichteunterschied zwischen flüssiger und fester Phase vor, was das Problem der Schrumpfungsporosität noch verschärft. Selbst beim Einsatz als Knetlegierung kann die Gussporosität über hohe Umformgrade nur teilweise geschlossen werden. In beiden Fällen ist mit entsprechenden erhöhten Qualitätsproblemen, dadurch bedingten erhöhtem Prüfaufwand und in weiterer Folge entsprechend höheren Ausschusszahlen zu rechnen. Die Ergebnisse nachgeschalteter Beschichtungsprozesse welche immer höhere Bedeutung gewinnen wie zum Beispiel galvanische Beschichtungen oder Polymerbeschichtungen, werden ebenso beeinträchtigt. Derartige Überzüge werden z.B. bei der Verwendung als Gleitlagermaterial vor allem dann immer wichtiger, wenn bleifreie Kupferlegierungen die heutigen Bleibronzen mit ihren hervorragenden tribologischen Eigenschaften ersetzen sollen.

Des Weiteren werden bei der auf Grund der auftretenden Porosität bevorzugten Verwendung als Knetlegierung diese Legierungen meist nach dem Verformungsschritt rekristallisierend geglüht, um innere Spannungen und daraus resultierende hohe Materialhärten zu senken bzw. die nach der Verformung geringe Restverformbarkeit wieder zu steigern. Es ist bekannt, dass die meisten festigkeitssteigernden Legierungselemente bzw. jene Elemente, welche die Korrosionsbeständigkeit verbessern, den Nachteil haben die Rekristallisationstemperatur in die Höhe zu treiben. Die für die angestrebten Eigenschaften der erfindungsgemäßen Legierung angeführte Schwefelzugabe hat eine vergleichbare Wirkung. Bei den dadurch erforderlichen hohen Glühtemperaturen wiederum neigen Kupferlegierungen vor allem in Kombination mit langen Behandlungszeiten zur Kornvergröberung, welche das Matrixmaterial schwächt. Speziell bei Werkstoffen, welche sich durch hohe Kaltverfestigung auszeichnen, führt dies zum Problem, dass es entweder zur Kornvergröberung kommt, oder die Rekristallisation nur unzureichend abläuft und Restdendriten zurückbleiben, welche ähnliche negative Effekte auf die mechanischen Eigenschaften der Werkstoffe haben wie ein zu grobes Gefüge. Zusätzlich fällt bei hohen Glühtemperaturen die Festigkeit des Stahl-Stützschicht auf Werte des normalgeglühten Zustands.

Es ist die Aufgabe der Erfindung, ein Gleitlagerelement zur Verfügung zu stellen, das eine bleifreie, Schwefel enthaltende Gusslegierung auf Kupferbasis als weitere Schicht aufweist, bei der die teilweise negativen Auswirkungen des Schwefels auf die Legierung reduziert sind. Die Aufgabe der Erfindung wird bei dem eingangs genannten Mehrschichtgleitlagerelement dadurch gelöst, dass die Kupferbasislegierung zwischen 0,1 Gew.-% und 3 Gew.-% Schwefel, zwischen 0,01 Gew.-% und 4 Gew.-% Eisen, zwischen 0 Gew.-%, insbesondere 0,001 Gew.-%, und 2 Gew.-% Phosphor, zumindest ein Element aus einer ersten Gruppe bestehend aus Zink, Zinn, Aluminium, Mangan, Nickel, Silizium, Chrom und Indium von in Summe zwischen 0,1 Gew.-% und 49 Gew.-%, wobei der Anteil an Zink zwischen 0 Gew.-% und 45 Gew.-% beträgt, der Anteil an Zinn zwischen 0 Gew.-% und 40 Gew.-% beträgt, der Anteil an Aluminium zwischen 0 Gew.-% und 15 Gew.-% beträgt, der Anteil an Mangan zwischen 0 Gew.-% und 10 Gew.-% beträgt, der Anteil an Nickel zwischen 0 Gew.-% und 10 Gew.-% beträgt, der Anteil an Silizium zwischen 0 Gew.-% und 10 Gew.-% beträgt, der Anteil an Chrom zwischen 0 Gew.-% und 2 Gew.-% beträgt, und der Anteil an Indium zwischen 0 Gew.-% und 10 Gew.-% beträgt, und zumindest ein Element aus einer zweiten Gruppe bestehend aus Silber, Magnesium, Kobalt, Titan, Zirkonium, Arsen, Lithium, Yttrium, Calcium, Vanadium, Molybdän, Wolfram, Antimon, Selen, Tellur, Bismut, Niob, Palladium in einem Anteil von jeweils zwischen 0 Gew.-% und 1,5 Gew.-%, wobei der Summenanteil der Elemente der zweiten Gruppe zwischen 0 Gew.-% und 2 Gew.-% beträgt, enthält und den Rest auf 100 Gew.-% Kupfer sowie aus der Herstellung der Elemente stammende Verunreinigungen bilden.

Von Vorteil ist dabei, dass die daraus gebildeten niedriglegierten Kupferbasislegierungen sich wegen der Schwefelzugabe durch gute Gießbarkeit auszeichnen. Es können damit Legierungen in Gleitlagern eingesetzt werden, die normalerweise nur bedingt geeignet sind. Weiter wirken die mit dem Schwefel gebildeten Kupfersulfide beim Erstarren als Kristallisationskeime und haben somit eine kornfeinende Wirkung. Es ist zudem möglich, diese Werkstoffe auch ohne eine zusätzliche Beschichtung zu betreiben. Zudem kann die Bearbeitbarkeit verbessert werden, da Sulfide als Spanbrecher wirken. Diese verbesserte Bearbeitbarkeit resultiert in verbesserter Oberflächenqualität mit geringeren Rauhigkeitswerten und Fehlstellen. Dadurch kann in weiterer Folge die Qualität einer Vielzahl von Beschichtungen, wie zum Beispiel galvanische Überzüge, PVD- oder Polymerbeschichtungen, positiv beeinflusst werden. Mit anderen Worten ausgedrückt, kann damit die Beschichtbarkeit der Kupferbasislegierung verbessert werden.

Die Kupferbasislegierung umfasst eine Kombination aus Schwefel sowie geringen Mengen Eisen und Phosphor. Phosphor wird wie bei der schmelzmetallurgischen Verarbeitung von Kupferwerkstoffen in erster Linie als Desoxidationsmittel eingesetzt. Durch einen Überschuss an Phosphor in der Kupferbasislegierung in Kombination mit der Eisenzugabe kann eine kornfeinende Wirkung erreicht werden. Damit kann eine gleichmäßige, feine Verteilung der intermetallischen Phasen (vorwiegend Sulfidphasen) mit Kupfer und den übrigen Legierungselementen erreicht werden. Durch die Kombination von Eisen und Phosphor können bereits in der Schmelze Eisenphosphide entstehen. Dadurch kann nicht nur ein Teil des für die Bindung zu einem Stahlgrundkörper schädlichen Phosphors abgebunden werden, sondern kann mit diesen intermetallischen Phasen bei rekristallisierenden Glühprozessen die Neigung zur Kornvergröberung reduziert werden, wodurch die mechanischen Eigenschaften der Kupferbasislegierung verbessert werden können. Zudem kann mit diesen Eisenphosphid-Phasen auf Grund ihrer hohen Härte die Heterogenität der beschriebenen Kupferbasislegierungen gesteigert werden, wodurch wiederum die tribologischen Eigenschaften positiv beeinflusst werden können.

Durch intermetallischen FeS Phasen, die neben den Kupfersulfiden entstehen, kann eine Verringerung der Fressneigung der bleifreien Kupferbasis-Lagerlegierungen erreicht werden. Die damit erreichbare tribologische Wirkung der Kupferbasislegierung kann in der Kombination von Kupfersulfiden (vorwiegend Cu₂S) und Eisensulfiden (FeS) gesehen werden.

Durch die Zugabe von Schwefel zur Kupferbasislegierung kann die Rekristallisationstemperatur von Kupfer erhöht werden, die Anfälligkeit von Kupfer zur sogenannten Wasserstoffkrankheit reduziert werden, die mechanische Bearbeitbarkeit durch verbesserte Spanbrechung unter Bildung von kurzbrechenden Spänen, verschleißhemmende Wirkung auf Bearbeitungswerkzeuge und somit deren erhöhte Standzeit und die resultierende Oberflächengüte verbessert werden.

Durch die Eisenzugabe kann, über eine kornfeinende Wirkung, die Verteilung der Schwefelausscheidungen verbessert werden. Durch die feine Verteilung und die Bildung von Eisensulfiden können tribologische Eigenschaften gesteigert werden. Eine Zugabe von über 5 Gew.-% Eisen hat neben der Erhöhung der Liquidustemperatur einen stark härtesteigernden Einfluss sowie eine Verschlechterung der Verformbarkeit zur Folge. Gemeinsam mit einer Zugabe von geringen Mengen Phosphor bildet sich direkt in der Schmelze Eisenphosphid (Fe₂P) welches hier, entgegen jenem in der Bindezone zum Stahl, erwünscht ist. Die angeführte Phase kann einerseits das Kornwachstum bei Glühbehandlungen einschränken ohne die Rekristallisationsfähigkeit an sich negativ zu beeinflussen, was vor allem die Prozessführung bei dieser Wärmebehandlung erheblich vereinfacht, andererseits hat die Einlagerung des Eisenphosphids in die Kupfermatrix günstigen Einfluss auf den Verschleißwiderstand dieser Legierungen.

Lithium kann auf Grund der Affinität zu Sauerstoff und Wasserstoff in Kupferlegierungen als Desoxidationsmittel und zur Entfernung von Wasserstoff eingesetzt werden. Lithium kann also die Menge von Phosphor zumindest großteils ersetzen, womit voranstehende Probleme bei Verbundgussverfahren, welche z.B. Lagerlegierungen mit einem Stahlgrundkörper verbinden, aufgrund zu hoher Gehalte an Phosphor und der dadurch entstehenden Sprödphase, vermieden werden können. Die genannte Sprödphase bildet sich genau an der Bindezone des Materialverbunds und beeinträchtigt die Haftfestigkeit je nach Ausprägung bis zur völligen Ablösung. Lithium als Desoxidationsmittel bildet auch bei höheren Zugaben keinerlei intermetallische Phasen mit Eisen aus dem Stahlgrundkörper. Durch die Verwendung von Lithium kann die Phosphorzugabe auf ein Minimum reduziert werden bzw. auch völlig entfallen, dadurch entfällt auch die Bildung von Sprödphasen, bzw. können gezielt kleine Phosphorgehalte eingestellt werden. Das verbrauchte Lithium kann eine flüssige Schlacke geringer Dichte bilden und damit aufschwimmen. Die Schmelze kann damit vor weiterem Sauerstoffzutritt und daraus folgendem Abbrand von Legierungselementen geschützt werden.

Es sei an dieser Stelle darauf hingewiesen, dass sich die Mengen an für die Desoxidation der Schmelze verbrauchten Lithiums naturgemäß nach dem Anteil an Sauerstoff in der Schmelze richtet. Der Fachmann kann daher bei Bedarf in Anpassung an den tatsächlichen Sauerstoffanteil auch einen entsprechenden Überschuss an Lithium zugeben.

Im Falle der Herstellung einer Zusammensetzung, die einer schwefelhaltigen Rotgusslegierungen entspricht, kann Lithium anstelle von Zirkonium oder Calcium (die beide eine entschwefelnde Wirkung zeigen) als Kornfeiner eingesetzt werden. Zirkonium wirkt zwar ebenfalls als Kornfeinungsmittel, reagiert aber mit Schwefel, wodurch dessen Wirkung reduziert ist.

Durch die Zugabe von Yttrium kann die Korrosionsbeständigkeit bleifreier Kupferbasislegierungen verbessert werden. Mengenanteile um 0,1 Gew-% senken die Gewichtszunahme durch Oxidation um beinahe 50 %. Eine verringerte Oxidationsneigung kann die Bindung von Polymerbeschichtungen am Lagermaterial im Betrieb eines Gleitlagers stabilisieren und damit die Betriebssicherheit erhöhen.

Zur Erhöhung der tribologisch wirksamen Phasen können Selen und/oder Tellur zugegeben werden.

Indium weist eine hohe Löslichkeit im Kupfer auf (> 10 Gew.-%). Es bildet intermetallische Phasen und kann zur Ausscheidungshärtung eingesetzt werden. Der Vorteil des Indiums liegt darin, dass nach einem Abschrecken der Lagerwerkstoff eine verbesserte Anpassungsfähigkeit aufweist, bis die Kupferbasislegierung über Langzeit-Auslagerungseffekte bei angehobener Temperatur (z.B. im Betrieb des Gleitlagers) seine Endhärte erreicht.

Durch die bevorzugt niedrigen Zinngehalte kann eine hohe Härtezunahme der Kupferbasislegierung vermieden werden. Im angegebenen Mengenbereich kann besser Einfluss auf die Sulfidverteilung in der Legierung genommen werden; mit der Abnahme des Zinngehaltes wird die körnige Struktur des Gefüges in den Hintergrund gedrängt und es bildest sich eine Legierung aus, deren Körner mit großen Strukturen entstehen.

Durch den Zinkgehalt kann eine besser definierte Kugelform der ausgeschiedenen Sulfide erreicht werden.

Silizium im angegebenen Mengenanteil kann in Hinblick auf die Gießbarkeit der Legierung und die Desoxidation von Vorteil sein.

Aluminiumzusätze in der Kupferbasislegierungen vermindern deren Neigung zur Korrosion bei hohen Temperaturen. Im abgegebenen Mengenanteil wird die β-Mischkristallbildung mit hoher Sicherheit vermieden.

Durch Mangan kann die Warmfestigkeit erhöht werden. Zudem kann mit manganhaltigen Legierungen ein verbessertes Ausheilen von Korrosionsschutzschichten erreicht werden.

Nickel bildet mit Schwefel Nickelsulfide, welche die generelle Phasenanzahl erhöhen können. Zudem kann mit Nickel die Korrosionsstabilität der Kupferbasislegierung verbessert werden. Das E-Modul einer Cu-Ni-Legierung steigt linear mit der Nickelzugabe.

Mit Chrom können die Rekristallisationstemperatur und die Warmfestigkeit der Kupferbasislegierung verbessert werden.

Gemäß einer bevorzugten Ausführungsvariante des Mehrschichtgleitlagerelementes kann vorgesehen sein, dass die Kupferbasislegierung der weiteren Schicht entweder Zink oder Zinn enthält. Durch die Vermeidung der Kombination beider Elemente in der Kupferbasislegierung kann eine deutliche Verbesserung der Gießeigenschaften der Legierung durch die damit erreichbare Verringerung des Erstarrungsintervalls der Kupferbasislegierung erreicht werden.

Zur weiteren Verbesserung der voranstehend genannten Eigenschaften der Kupferbasislegierung kann zumindest eine der folgenden Ausführungsvarianten der Erfindung vorgesehen werden:
- der Summenanteil der Elemente aus der ersten Gruppe bestehend aus Zink, Zinn, Aluminium, Mangan, Nickel, Silizium, Chrom beträgt zwischen 0,5 Gew.-% und 15 Gew.-%, und/oder
- die Kupferbasislegierung der weiteren Schicht enthält zwischen 0,01 Gew.-% und 5 Gew.-% Zink, und/oder
- die Kupferbasislegierung der weiteren Schicht enthält zwischen 0,01 Gew.-% und 10 Gew.-% Zinn, und/oder
- die Kupferbasislegierung der weiteren Schicht enthält zwischen 0,01 Gew.-% und 7,5 Gew.-% Aluminium, und/oder
- die Kupferbasislegierung der weiteren Schicht enthält zwischen 0,01 Gew.-% und 5 Gew.-% Mangan, und/oder
- die Kupferbasislegierung der weiteren Schicht enthält zwischen 0,01 Gew.-% und 5 Gew.-%, insbesondere zwischen 0,01 Gew.-% und 2 Gew.-%, Nickel, und/oder
- die Kupferbasislegierung der weiteren Schicht enthält zwischen 0,01 Gew.-% und 7 Gew.-%, insbesondere zwischen 0,01 Gew.-% und 3 Gew.-%, Silizium, und/oder
- die Kupferbasislegierung der weiteren Schicht enthält zwischen 0,01 Gew.-% und 1,5 Gew.-%, insbesondere zwischen 0,01 Gew.-% und 1 Gew.-%, Chrom, und/oder
- die Kupferbasislegierung der weiteren Schicht enthält zwischen 0,3 Gew.-% und 0,8 Gew.-% Schwefel, und/oder
- die Kupferbasislegierung der weiteren Schicht enthält zwischen 0,01 Gew.-% und 0,1 Gew.-% Phosphor, und/oder
- die Kupferbasislegierung der weiteren Schicht enthält zwischen 0,3 Gew.-% und 1,5 Gew.-% Eisen.

Gemäß einer anderen Ausführungsvariante des Mehrschichtgleitlagerelementes kann auch vorgesehen sein, dass die Kupferbasislegierung der weiteren Schicht zusätzlich zwischen 0,001 Gew.-% und 1,5 Gew.-%, insbesondere zwischen 0,001 Gew.-% und 1 Gew.-%, Bor enthält. Es ist damit möglich, einen dichteren Aufbau der Korngrenzen zu erhalten. Die Kupferlegierung weist damit eine verbesserte Festigkeit (erhöhte Korngrenzenfestigkeit) und Duktilität auf. Zudem zeigt die Legierung eine verminderte Anrissgefahr, wodurch das Gefüge in der weiteren Schicht risszäher wird. Darüber hinaus kann das Bor auch positiv in Hinblick auf die Desoxidation der Schmelze und, gegebenenfalls mit Eisen, als Kornfeinungsmittel wirken.

Nach einer weiteren Ausführungsvariante kann vorgesehen sein, dass die sulfidischen Ausscheidungen innerhalb der gesamten weiteren Schicht homogen verteilt vorliegen, sodass die weitere Schicht also über den gesamten Querschnitt im Wesentlichen die gleichen Eigenschaften aufweist.

Es kann aber nach einer anderen Ausführungsvariante des Mehrschichtgleitlagerelementes auch vorgesehen sein, dass die sulfidischen Ausscheidungen nur innerhalb einer Teilschicht der Kupferbasislegierung der weiteren Schicht ausgebildet sind. Es kann damit der weiteren Schicht selbst ein breiteres Eigenschaftsspektrum verliehen werden, sodass gegebenenfalls das Mehrschichtgleitlagerelement durch Reduktion der Anzahl der Schichten einfacher aufgebaut werden kann.

Nach einer Ausführungsvariante dazu kann vorgesehen sein, dass die Teilschicht eine Schichtdicke aufweist, die zwischen 5 % und 85 % der Gesamtschichtdicke der weiteren Schicht beträgt. Bei einem Anteil der Teilschicht an der Schichtdicke von weniger als 5 % der Gesamtschichtdicke kann die weitere Schicht ihre Aufgabe als weitere Schicht des Mehrschichtgleitlagerelementes, insbesondere als Gleitschicht, nicht mehr im gewünschten Ausmaß erfüllen. Sie kann dann aber noch immer die Eigenschaften als Einlaufschicht aufweisen. Bei einer Schichtdicke von mehr als 85 % der Gesamtschichtdicke ist hingegen der Aufwand für die Ausbildung der Teilschichten höher als der Gewinn, der durch die Reduktion der Anzahl an Einzelschichten erreicht werden kann.

Der zugegebene Schwefel reagiert mit anderen Bestandteilen der Kupferbasislegierung zu Sulfiden. Dabei kann gemäß einer anderen Ausführungsvariante der Erfindung vorgesehen sein kann, dass die sulfidischen Ausscheidungen zu zumindest 50 Flächen-% aus einer Mischung aus Kupfersulfiden und Eisensulfiden bestehen. Es kann damit das Selbstschmierverhalten der Kupferbasislegierung verbessert werden.

Zur weiteren Verbesserung dieses Effektes kann nach einer weiteren Ausführungsvariante des Mehrschichtgleitlagerelementes vorgesehen sein, dass der Anteil an Kupfersulfiden an der Mischung aus Kupfersulfiden und Eisensulfiden zumindest 60 Flächen-% beträgt.

Zum besseren Verständnis der Erfindung wird diese anhand der nachfolgenden Figuren näher erläutert.

Es zeigen jeweils in vereinfachter, schematischer Darstellung:
- Fig. 1: ein Mehrschichtgleitlagerelement in Seitenansicht;
- Fig. 2: einen Ausschnitt aus der Gleitschicht einer Ausführungsvariante des Mehrschichtgleitlagerelements in Seitenansicht geschnitten;
- Fig. 3: einen Ausschnitt aus der Gleitschicht einer anderen Ausführungsvariante des Mehrschichtgleitlagerelements in Seitenansicht geschnitten;
- Fig. 4: einen Ausschnitt aus der Gleitschicht einer weiteren Ausführungsvariante des Mehrschichtgleitlagerelements in Seitenansicht geschnitten;
- Fig. 5: einen Ausschnitt aus der Gleitschicht einer Ausführungsvariante des Mehrschichtgleitlagerelements in Seitenansicht geschnitten.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

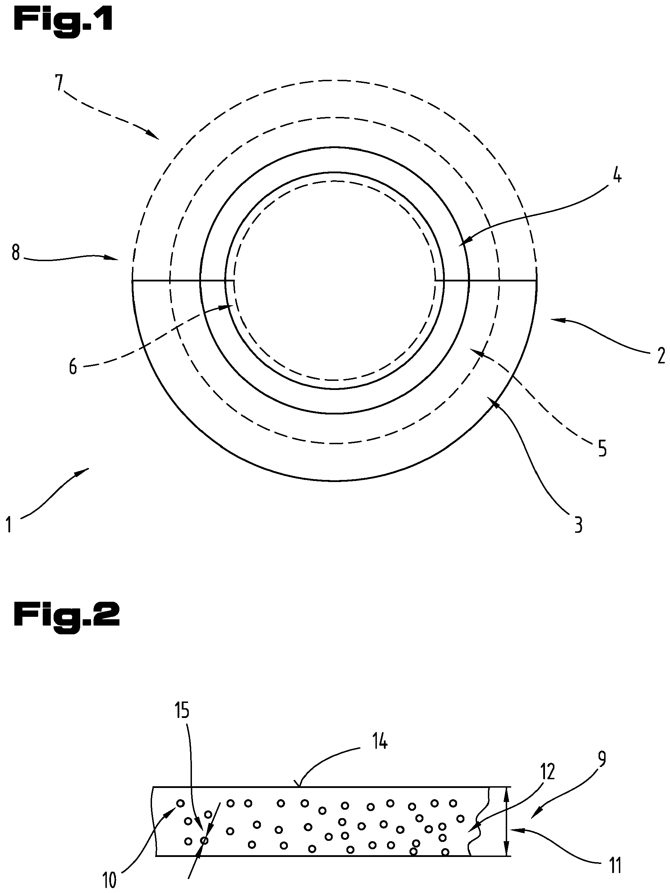

In Fig. 1 ist ein Mehrschichtgleitlagerelement 1, insbesondere ein Radialgleitlagerelement, aus einem Verbundwerkstoff in Seitenansicht dargestellt.

Das Mehrschichtgleitlagerelement 1 ist insbesondere zur Verwendung in einem Verbrennungsmotor oder zur Lagerung einer Welle vorgesehen. Es kann aber auch für andere Anwendungen eingesetzt werden, beispielsweise in Windkraftanlagen, insbesondere Windkraftanlagengetrieben, z.B. an einem oder als Beschichtung eines Planetenradbolzens im Bereich der Lagerung eines Planetenrades, als Innenbeschichtung eines Zahnrades (ebenfalls zur Lagerung des Zahnrades), als Industriegleitlager in Kompressoren, Dampf- und Gasturbinen, oder als Teil eines Gleitlagers für ein Schienenfahrzeug, etc..

Das Mehrschichtgleitlagerelement 1 weist einen Gleitlagerelementkörper 2 auf. Der Gleitlagerelementkörper 2 umfasst eine Stützmetallschicht 3 und eine darauf angeordnete weitere Schicht 4 bzw. besteht aus der Stützmetallschicht 3 und der damit verbundenen weiteren Schicht 4.

Wie aus Fig. 1 strichliert angedeutet zu ersehen ist, kann der Gleitlagerelementkörper 2 auch eine oder mehrere zusätzliche Schichte(n) aufweisen, beispielsweise eine Lagermetallschicht 5, die zwischen der weiteren Schicht 4 und der Stützmetallschicht 3 angeordnet ist, und/oder eine Einlaufschicht 6 auf der weiteren Schicht 4. Zwischen zumindest zwei der Schichten des Mehrschichtgleitlagerelementes 1 können auch zumindest eine Diffusionssperrschicht und/oder zumindest eine Bindeschicht angeordnet sein.

Da der prinzipielle Aufbau derartiger Mehrschichtgleitlagerelemente 1 aus dem Stand der Technik bekannt ist, sei bezüglich Einzelheiten des Schichtaufbaus auf die einschlägige Literatur dazu verwiesen.

Ebenso sind die verwendeten Werkstoffe, aus denen die Stützmetallschicht 3, die Lagermetallschicht 5, die Einlaufschicht 6, die zumindest eine Diffusionssperrschicht und die zumindest eine Bindeschicht bestehen können, aus dem Stand der Technik bekannt, und sei daher bezüglich dieser auf die einschlägige Literatur verwiesen. Beispielhaft sei angeführt, dass die Stützmetallschicht 3 aus einem Stahl, die Lagermetallschicht 5 aus einer Kupferlegierung mit 5 Gew.-% Zinn und dem Rest Kupfer, die Einlaufschicht aus Zinn Blei, oder Bismut oder aus einem, zumindest einen Zusatzstoff enthaltenden, synthetischen Polymer oder einer PVD-Beschichtung, die Diffusionssperrschicht z.B. aus Kupfer oder Nickel, gebildet sein können.

Das halbschalenförmige Mehrschichtgleitlagerelement 1 bildet zusammen mit zumindest einem weiteren Gleitlagerelement 7 - je nach konstruktivem Aufbau kann auch mehr als ein weiteres Gleitlagerelement 7 vorhanden sein - ein Gleitlager 8 aus. Dabei ist bevorzugt das im eingebauten Zustand untere Gleitlagerelement durch das Mehrschichtgleitlagerelement 1 nach der Erfindung gebildet. Es besteht aber auch die Möglichkeit, dass zumindest eines der zumindest einen weiteren Gleitlagerelemente 7 durch das Mehrschichtgleitlagerelement 1 oder das gesamte Gleitlager 8 aus zumindest zwei Mehrschichtgleitlagerelement 1 nach der Erfindung gebildet ist.

Es ist weiter möglich, dass das Gleitlagerelement 1 als Gleitlagerbuchse ausgebildet ist, wie dies in Fig. 1 strichliert angedeutet ist. In diesem Fall ist das Mehrschichtgleitlagerelement 1 gleichzeitig das Gleitlager 8.

Weiter ist es möglich, dass die weitere Schicht 4 eine Direktbeschichtung bildet, beispielsweise eine radial innere Beschichtung eines Pleuelauges, wobei in diesem Fall der zu beschichtende Bauteil, also beispielsweise das Pleuel, die Stützmetallschicht 3 bildet.

Weiter kann das Mehrschichtgleitlagerelement 1 bzw. das Gleitlager 8 auch in Form einer Anlaufscheibe, eines Bundlagers, etc., ausgebildet sein.

Die weitere Schicht 4 ist insbesondere als Gleitschicht 9 ausgebildet. Dazu ist in Fig. 2 eine erste Ausführungsvariante dieser Gleitschicht 9 dargestellt.

Die Gleitschicht 9 besteht aus einer Gusslegierung aus einer Kupferbasislegierung.

Die Kupferbasislegierung weist neben Kupfer Schwefel, Eisen, Phosphor, zumindest ein Element aus einer ersten Gruppe bestehend aus Zink, Zinn, Aluminium, Mangan, Nickel, Silizium, Chrom und Indium von in Summe zwischen 0,1 Gew.-% und 49 Gew.-%, und zumindest ein Element aus einer zweiten Gruppe bestehend aus Silber, Magnesium, Kobalt, Titan, Zirkonium, Arsen, Lithium, Yttrium, Calcium, Vanadium, Molybdän, Wolfram, Antimon, Selen, Tellur, Bismut, Niob, Palladium, wobei der Summenanteil der Elemente der zweiten Gruppe zwischen 0 Gew.-% und 2 Gew.-% beträgt.

Gegebenenfalls kann die Kupferbasislegierung der weiteren Schicht 4 zusätzlich Bor enthalten.

Die Kupferbasislegierung ist bleifrei, wobei bleifrei bedeutet, dass Blei im Ausmaß von maximal 0,1 Gew.-% enthalten sein kann.

Da die primären Wirkungen der einzelnen Elemente in Kupferbasislegierungen aus dem Stand der Technik bekannt sind, sei diesbezüglich darauf verwiesen. Zudem sei auf die voranstehenden Ausführungen zu den Effekten der Legierungselement verwiesen.

Die möglichen Anteile der einzelnen Elemente an der Kupferbasislegierung sind in Tabelle 1 zusammengefasst. Die Prozentangaben zu den Anteilen in Tabelle 1 sind, so wie in der gesamten Beschreibung, als Gew.-% zu verstehen, sofern nicht ausdrücklich etwas anderes angegeben ist.

Bei jeder Kupferbasislegierung bildet, abgesehen von unvermeidlichen Verunreinigungen, Kupfer den Rest auf 100 Gew.-%.

**Tabelle 1: Mengenbereiche der Legierungselemente der Kupferbasislegierung**

| Element | Bereich [Gew.-%] | bevorzugter Bereich [Gew.-%] | besonders bevorzugter Bereich [Gew.-%] |
|---|---|---|---|
| S | 0,1 - 3 | 0,2 - 1,5 | 0,3 - 0,8 |
| Fe | 0,01 - 4 | 0,2-2 | 0,3 - 1,5 |
| P | 0,001 - 2 | 0,01 - 0,5 | 0,02 - 0,1 |
| Sn | 0-40 | 0,001 - 25 | 0,01 - 10 |
| Zn | 0-45 | 0,001 - 9 | 0,01 - 5 |
| Al | 0-15 | 0,001 - 10 | 0,01-7,5 |
| Mn | 0-10 | 0,001 - 7,5 | 0,01 - 5 |
| Ni | 0-10 | 0,01 - 5 | 0,01 - 2 |
| Si | 0-10 | 0,01 - 7 | 0,01 - 3 |
| Cr | 0-2 | 0,01 - 1,5 | 0,01 - 1 |
| In | 0-10 | 0,01 - 7 | 0,01 - 3 |
| Ag | 0- 1,5 | 0,001 - 1 | 0,001 - 0,1 |
| Mg | 0- 1,5 | 0,001 - 1 | 0,001 - 0,1 |
| Co | 0- 1,5 | 0,001 - 1 | 0,001 - 0,1 |
| Ti | 0- 1,5 | 0,001 - 1 | 0,001 - 0,1 |
| Zr | 0- 1,5 | 0,001 - 1 | 0,001 - 0,1 |
| As | 0- 1,5 | 0,001 - 1 | 0,001 - 0,1 |
| Li | 0- 1,5 | 0,001 - 1 | 0,001 - 0,1 |
| Y | 0- 1,5 | 0,001 - 1 | 0,001 - 0,1 |
| Ca | 0- 1,5 | 0,001 - 1 | 0,001 - 0,1 |
| V | 0- 1,5 | 0,001 - 1 | 0,001 - 0,1 |
| Mo | 0- 1,5 | 0,001 - 1 | 0,001 - 0,1 |
| W | 0- 1,5 | 0,001 - 1 | 0,001 - 0,1 |
| Sb | 0-1,5 | 0,001 - 1 | 0,001 - 0,1 |
| Se | 0-1,5 | 0,001 - 1 | 0,001 - 0,1 |
| Te | 0-1,5 | 0,001 - 1 | 0,001 - 0,1 |
| Bi | 0-1,5 | 0,001 - 1 | 0,001 - 0,1 |
| B | 0, - 1,5 | 0,001 - 1 | 0 - Verunreinigung |
| Niob | 0-1,5 | 0,001 - 1 | 0,001 - 0,1 |
| Palladium | 0-1,5 | 0,001 - 1 | 0,001 - 0,1 |

Die Angaben zu den Mengenbereichen in Tabelle 1 sind so zu verstehen, dass damit auch die jeweiligen Rand- und Zwischenbereiche angesprochen sind. Beispielsweise kann der Anteil an S von 0,1 - 3, von 0,2 - 1,5, von 0,3 - 0,8, von 0,1 - 0,2, von 0,1 - 1,5, von 0,1 - 0,3, von 0,1 - 0,8, von 0,2 - 0,3, von 0,2 - 0,8, von 0,3 - 3, von 0,3 - 1,5, von 0,8 - 3 und von 0, 8 - 1,5 , jeweils Gew.-%, betragen kann. Entsprechendes gilt für die weiteren Elemente in Tabelle 1.

Der Summenanteil der Elemente aus der ersten Gruppe umfassend oder bestehend aus Zink, Zinn, Aluminium, Mangan, Nickel, Silizium, Chrom beträgt vorzugsweise maximal 7 Gew.-%, insbesondere maximal 5 Gew.-%. Beispielsweise kann der Summenanteil der Elemente aus der ersten Gruppe auch zwischen 0,5 Gew.-% und 15 Gew.-% betragen.

Es ist weiter bevorzugt, wenn Zinn und Zink nicht gemeinsam in der Kupferbasislegierung enthalten sind, diese also entweder Zinn oder Zink enthält.

Wie aus Fig. 2 ersichtlich ist, sind in der Gleitschicht 9 sulfidische Ausscheidungen 10 enthalten. Diese sulfidischen Ausscheidungen 10 sind durch Reaktion von zumindest einem metallischen Legierungsbestandteil der Kupferbasislegierung mit dem Schwefel entstanden. Es sind auch Mischsulfide möglich.

Wie aus dem nachstehend erläuterten Verfahren ersichtlich ist, sind die sulfidischen Ausscheidungen 10 der Kupferbasislegierung nicht als solche zugegeben, wenngleich dies im Rahmen der Erfindung möglich ist, sondern werden diese Ausscheidungen 10 aus zumindest einem Legierungsbestandteil in Folge einer Redoxreaktion in der Schmelze während der Herstellung der Legierung erzeugt.

Der Anteil an den sulfidischen Ausscheidungen 10 in der Kupferbasislegierung beträgt bevorzugt zwischen 1 Flächen-% und 20 Flächen-%, insbesondere zwischen 2 Flächen-% und 15 Flächen-%. Bei einem Anteil von mehr als 24 Flächen-% besteht die Gefahr, dass der enthaltene Schwefel sich negativ an den Korngrenzen bemerkbar macht. Bei einem Anteil von weniger als 1 Flächen-% werden zwar noch Effekte beobachtet, allerdings nur in einem nicht zufriedenstellenden Ausmaß. Die Angabe Flächen-% ist dabei jeweils auf die Gesamtfläche eines Längsschliffbildes der Gleitschicht 9 bezogen.

Die Gleitschicht 9 weist eine Gesamtschichtdicke 11 auf. Die Gesamtschichtdicke 11 beträgt insbesondere zwischen 100 µm und 2500 µm, bevorzugt zwischen 150 µm und 700 µm.

Wie aus Fig. 2 ersichtlich ist, sind die sulfidischen Ausscheidungen 10 bei dieser Ausführungsvariante bevorzugt über die gesamte Gesamtschichtdicke 11 der Gleitschicht 9 und somit in der gesamten Gleitschicht 9, d.h. in deren gesamten Volumen, homogen verteilt angeordnet.

Mit dem Ausdruck "homogen" ist dabei gemeint, dass der Unterschied in der Anzahl an sulfidischen Ausscheidungen 10 von jeweils zwei verschiedenen Volumenbereichen der Gleitschicht 9 um nicht mehr als 12 %, insbesondere um nicht mehr als 9 %, voneinander abweicht, wobei als Referenzwert mit 100 % eine Anzahl an sulfidischen Ausscheidungen 10 in einem Volumenbereich der Gleitschicht 9 ist, die sich aus der Gesamtanzahl an Ausscheidungen 10 im Gesamtvolumen der Gleitschicht 9 dividiert durch die Anzahl der Volumenbereiche, die das Gesamtvolumen umfasst, errechnet.

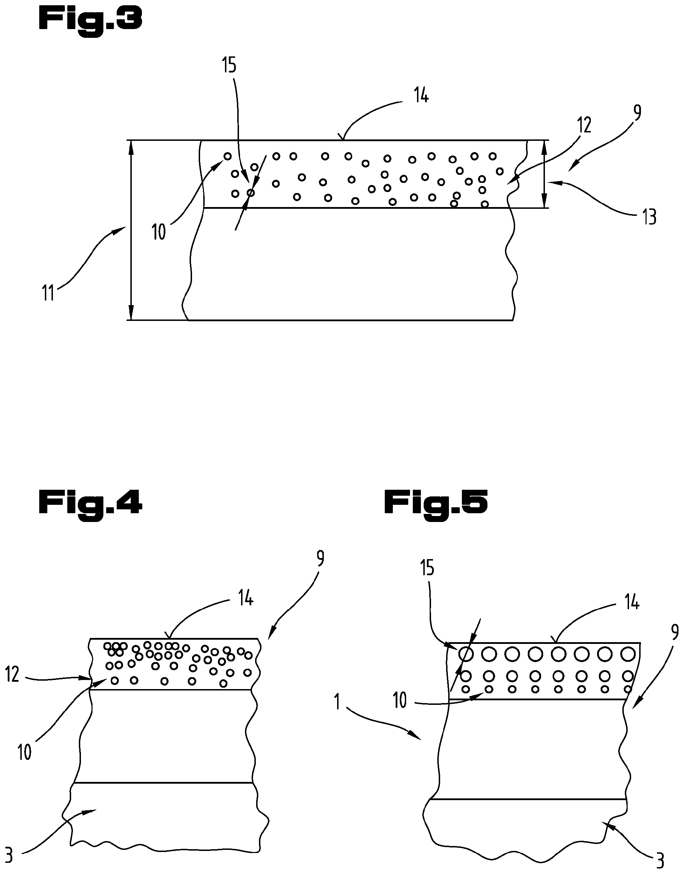

Es ist aber auch möglich, dass sich die Anordnung bzw. Ausbildung der sulfidischen Ausscheidungen 10 lediglich auf einen Bereich innerhalb einer Teilschicht 12 der Gleitschicht 9 beschränkt, wie dies aus Fig. 3 ersichtlich ist. Die sulfidischen Ausscheidungen 10 sind dabei innerhalb, insbesondere ausschließlich innerhalb, dieser Teilschicht 12 angeordnet. Innerhalb dieser Teilschicht 12 sind die sulfidischen Ausscheidungen 10 bevorzugt wieder homogen verteilt angeordnet, wobei der Begriff "homogen" im Sinne der voranstehenden Definition, in der "Gleitschicht" durch "Teilschicht" ersetzt ist, zu verstehen ist.

Nach einer Ausführungsvariante dazu kann vorgesehen sein, dass die Teilschicht 12 eine Schichtdicke 13 aufweist, die zwischen 5 % und 85 %, insbesondere zwischen 10 % und 50 %, der Gesamtschichtdicke 11 der weiteren Schicht 4, d.h. in diesem Ausführungsbeispiel der Gleitschicht 9, beträgt.

Die Teilschicht 12 ist vorzugsweise an einer Seite der Gleitschicht 9 ausgebildet und bildet somit vorzugsweise eine Oberfläche 14, insbesondere eine Gleitfläche, des Mehrschichtgleitlagerelementes 1.

Es ist aber auch möglich, dass die Anzahl der sulfidischen Ausscheidungen 10 in Richtung von der Oberfläche 14 der Kupferbasislegierung der Gleitschicht 9 auf die Stützmetallschicht 3 graduell abnimmt, wie dies in Fig. 4 für die Teilschicht 12 dargestellt ist. Ein derartiger Gradient kann auch in der Gleitschicht 9 insgesamt ausgebildet sein, also nicht nur in der Teilschicht 12. Sulfidische Ausscheidungen 10 sind dabei im Sinne der Fig. 2 im gesamten Volumen der Gleitschicht 9 vorhanden.

Es sei darauf hingewiesen, dass in den Figuren jeweils gegebenenfalls für sich eigenständige Ausführungsform des Mehrschichtgleitlagerelementes 1 gezeigt sind, wobei für gleiche Teile gleiche Bezugszeichen bzw. Bauteilbezeichnungen verwendet werden. Um unnötige Wiederholungen zu vermeiden, wird jeweils auf die detaillierte Beschreibung zu den gesamten Figuren hingewiesen bzw. darauf Bezug genommen.

Durch die Reduktion der Anzahl der sulfidischen Ausscheidungen 10 in der Gleitschicht 9 bzw. der Teilschicht 12 der Gleitschicht 9 in Richtung auf die Stützmetallschicht 3 kann ein Härtegradient in der Gleitschicht 9 eingestellt werden.

Es ist auch möglich, dass die Anzahl der sulfidischen Ausscheidungen 10 in der Gleitschicht 9 bzw. der Teilschicht 12 der Gleitschicht 9 in Richtung von der Oberfläche 14 der Kupferbasislegierung der Gleitschicht 9 auf die Stützmetallschicht 3 graduell zunimmt bzw. generell variiert.

Generell können die sulfidischen Ausscheidungen 10 einen maximale Partikeldurchmesser 15 (Fig. 2 und 3) von maximal 60 µm, insbesondere zwischen 0,1 µm und 30 µm, aufweisen. Vorzugsweise beträgt der maximale Partikeldurchmesser 15 zwischen 10 µm und 25 µm. Unter dem maximalen Partikeldurchmesser 15 wird dabei die größte Abmessung verstanden, die ein Partikel aufweist.

Die Korngröße des restlichen Gefüges kann zwischen 2 µm und 500 µm, insbesondere zwischen 2 µm und 40 µm betragen. Größere Korngrößen treten dabei bevorzugt nur an der Bindezone der Gleitschicht 9 zu der unmittelbar darunter angeordneten Schicht des Mehrschichtgleitlagerelementes 1 auf. Im Spezialfall eines dendritischen Gussgefüges kann die Korngröße auch der gesamten Schichtdicke entsprechen.

Es ist dabei möglich, dass der Partikeldurchmesser 15 der sulfidischen Ausscheidungen 10 über das gesamte Volumen der Gleitschicht 9 im Wesentlichen konstant bleibt, d.h. dass sich die maximalen Partikeldurchmesser 15 der Ausscheidungen 10 um nicht mehr als 20 %, insbesondere nicht mehr als 15 %, unterscheiden.

Andererseits besteht nach einer weiteren Ausführungsvariante des Mehrschichtgleitlagerelementes 1 die Möglichkeit, wie dies in Fig. 5 dargestellt ist, dass die sulfidischen Ausscheidungen 10 einen maximalen Partikeldurchmesser 15 aufweisen, der in Richtung von der Oberfläche 14 der Kupferbasislegierung auf die Stützmetallschicht 3 graduell abnimmt. Dabei kann der Partikeldurchmesser 15 der sulfidischen Ausscheidungen 10 um einen Wert abnehmen, der ausgewählt ist aus einem Bereich von 0,1 % bis 80 %, insbesondere aus einem Bereich von 0,1 % bis 70 %, bezogen auf den Partikeldurchmesser 15 der Ausscheidungen 10 im Bereich der Oberfläche 14.

Es ist aber auch möglich, dass die sulfidischen Ausscheidungen 10 einen maximalen Partikeldurchmesser 15 aufweisen, der in Richtung von der Oberfläche 14 der Kupferbasislegierung auf die Stützmetallschicht 3 graduell zunimmt bzw. generell variiert. Dabei kann die Partikeldurchmesser 15 der sulfidischen Ausscheidungen 10 um einen Wert zunehmen, der ausgewählt ist aus einem Bereich von 0,1 % bis 80 %, insbesondere aus einem Bereich von 0,1 % bis 70 %, bezogen auf den Partikeldurchmesser 15 der sulfidischen Ausscheidungen 10 im Bereich der Oberfläche 14.

Der Habitus der sulfidischen Ausscheidungen 10 kann zumindest annähernd kugelförmig, zumindest annähernd ellipsoidförmig bzw. eiförmig, knollenförmig, stängelförmig (also länglich), zumindest annähernd kubisch, etc., oder völlig unregelmäßig sein. Bevorzugt sind die sulfidischen Ausscheidungen 10 zumindest annähernd rund bzw. zumindest annähernd kugelförmig bzw. zumindest annähernd ellipsoidförmig ausgebildet.

Wie bereits erwähnt sind die Ausscheidungen 10 sulfidischer Natur. Die sulfidischen Ausscheidungen 10 können hauptsächlich aus Kupfersulfiden und/oder Eisensulfiden bestehen. Der Anteil dieser Mischung am Gesamtanteil der Sulfide beträgt zumindest 50 Flächen-%, insbesondere zumindest 70 Flächen-%, vorzugsweise zumindest 80 Flächen-%. Neben diesen Sulfiden existieren in der Kupferbasislegierung aber auch noch andere Sulfide, wie dies voranstehend bereits ausgeführt wurde, beispielsweise Zinksulfide.

Das Zinksulfid kann innerhalb zumindest eines diskreten Bereichs im Kupfersulfidpartikel ausgebildet sein. Es können zwischen einem und fünf derartige diskrete Bereiche innerhalb der Kupfersuilfidpartikel ausgebildet sein. Mit anderen Worten kann das Zinksulfid inhomogen verteilt in den Kupfersulfidpartikeln enthalten sein.

Die Legierung kann auch eine Mischung aus Kupfersulfiden und Eisensulfiden enthalten. Innerhalb dieser Mischung aus Kupfersulfiden und Eisensulfiden kann der Anteil an Kupfersulfiden zumindest 60 Flächen-%, insbesondere zumindest 75 Flächen-%, betragen.

Um eine möglichst feine Verteilung der Sulfidphasen (sulfidischen Ausscheidungen 10) in der weiteren Schicht 4 zu erreichen, welche die Wirkung der Schwefelzugabe besser nutzt, sollte ein feines Matrixgefüge ausgebildet werden. Dies kann einerseits über hohe Abkühlraten, andererseits über metallurgische Kornfeinung erfolgen.

Bei schwefelhaltigen Legierungen hat sich gezeigt, dass viele der kornfeinenden Legierungselemente zusätzlich eine hohe Affinität zum Schwefel aufweisen und geneigt sind mit diesem Element zum Teil unerwünschte Verbindungen einzugehen, welche dann verschlacken. Im Falle der Kupferlegierungen muss im Speziellen das Zirkonium erwähnt werden, welches als sehr guter Kornfeiner wirken kann, jedoch auch eine starke entschwefelnde Wirkung besitzt. Ein weiteres Element zur Kornfeinung im Kupfer ist z.B.: Calcium, jedoch ist aus der Stahlindustrie seine entschwefelnde Wirkung bekannt. Grundsätzlich kann dem über den Schwefelanteil, die Temperaturführung, den Zeitpunkt der Zugabe der Entschwefelung entgegengewirkt werden.

Die meisten für Kupferlegierungen bekannten Kornfeinungsmittel haben eine hohe Affinität zu Sauerstoff und würden somit mit in der nicht desoxidierten Schmelze vorhandenem Sauerstoff reagieren und ihre Wirkung verlieren.

Die Zugabe von Phosphor als Desoxidationsmittel in Form von Phosphorkupfer zur Desoxidation von Kupferlegierungen ist bekannt. Durch die Desoxidation werden unter anderem die Fließeigenschaften der Schmelze verbessert, zusätzlich schützt man den zulegierten Schwefel vor dem Abbrennen mit Sauerstoff in der Schmelze. Wie bereits erwähnt, erhöht ein zu hoher Restgehalt an Phosphor beim Verbundgießen das Risiko einer Sprödphasenbildung (Eisenphosphid) in der Bindezone. Die korrekte Zugabemenge kann auf Grund der Sauerstoffaktivität der aktuellen Schmelze über die stöchiometrischen Verhältnisse berechnet werden. Jedoch ist die Messung der Aktivität in den angewandten Legierungen nur mit einmalig verwendbaren Messköpfen möglich und stets mit einer Messunsicherheit behaftet. Bei den geringen Schmelzemengen von wenigen 100kg ist eine solche Messung nicht wirtschaftlich. Zudem ist der Eintrag an Sauerstoff und Wasserstoff durch die Messung selbst ein beachtlicher Nachteil.

Die Verwendung von Lithium in den erwähnten Kupferlegierungen bringt mehrere Vorteile mit sich. Lithium hat hervorragende desoxidierende Wirkung. Die so erzielten geringen Restsauerstoffgehalte schützen so das Legierungselement Schwefel und andere sauerstoffaffine Elemente vor Abbrand. Neben der Entfernung von Sauerstoff hat Lithium auch die Eigenschaft mit Wasserstoff Verbindungen (LiH, LiOH) einzugehen. Dadurch bewirkt die Lithiumzugabe auch eine Senkung des Wasserstoffgehaltes in der Schmelze. Lithium ist in der Lage mit seinen Reaktionspartnern eine flüssige Schlacke über der Schmelze zu bilden und verhindert so weiteren Sauerstoff- und Wasserstoffzutritt zur Schmelze. Weiter hat Lithium an sich eine kornfeinende Wirkung und sichert damit auch die feine Verteilung der Sulfide im Werkstoff.

Zur Herstellung des Mehrschichtgleitlagerelementes 1 kann in einem ersten Schritt ein Vormaterial aus zumindest zwei Schichten hergestellt werden. Dazu kann im einfachsten Fall auf einen, insbesondere ebenen, Metallstreifen oder ein, insbesondere ebenes, Metallblech die Kupferbasislegierung aufgegossen werden.

Der Metallstreifen oder das Metallblech bildet dabei die Stützmetallschicht 3. Für den Fall, dass ebene Metallstreifen oder Metallbleche eingesetzt werden, werden diese in einem späteren Verfahrensschritt noch zum jeweiligen Mehrschichtgleitlagerelement1 umgeformt, wie dies an sich aus dem Stand der Technik bekannt ist.

Wie bereits voranstehend erwähnt, kann das Mehrschichtgleitlagerelement 1 auch mehr als zwei Schichten aufweisen. In diesem Fall kann die Kupferbasislegierung auf die jeweils oberste Schicht des Verbundmaterials mit der Stützmetallschicht 3 aufgegossen werden oder es wird vorerst ein weiteres, insbesondere zweischichtiges, Verbundmaterial hergestellt, dass anschließend mit der Stützmetallschicht 3 oder einem Verbundmaterial umfassend die Stützmetallschicht 3 verbunden wird, beispielsweise durch Walzplattieren, gegebenenfalls unter Zwischenanordnung einer Bindefolie.

Das Aufgießen der Kupferbasislegierung auf den Metallstreifen bzw. das Metallblech oder auf eine Schicht eines Verbundmaterials kann beispielsweise mittels horizontalem Bandguss erfolgen.

Es ist aber auch möglich, dass eine Kupferbasislegierung in einem ersten Schritt beispielsweise mittels Strangguss oder Blockguss hergestellt wird und die verfestigte Kupferbasislegierung erst danach mit zumindest einer der weiteren Schichten des Mehrschichtgleitlagerelementes 1, insbesondere der Stützmetallschicht 3 verbunden wird, beispielsweise mittels Walzplattieren.

Nach einer anderen Ausführungsvariante besteht die Möglichkeit, dass das Mehrschichtgleitlagerelement 1 mit einem Schleudergussverfahren oder nach einem Standgussverfahren hergestellt wird.

Es sind auch Direktbeschichtungen von Bauteilen, wie beispielsweise Pleuelaugen, möglich. Ebenso sind Pulverbeschichtungsverfahren anwendbar.

Die Kupferbasislegierung kann auch nach einem Sinterverfahren auf die jeweils darunterliegende Schicht des Mehrschichtgleitlagerelementes 1 oder des Bauteils aufgebracht werden.

Die Anteile an den Komponenten in der für die Herstellung der Gleitschicht 9 verwendeten Ausgangsmischung werden entsprechend der Angaben in Tabelle 1 gewählt.

Das Gießen von Legierungen aus der Schmelze ist dem Gleitlagerfachmann prinzipiell bekannt, sodass hinsichtlich der Parameter, wie Temperatur, etc. auf den einschlägigen Stand der Technik verwiesen sei. Der Guss der Legierung erfolgt vorzugsweise unter Schutzgasatmosphäre.

Vorzugsweise wird die Kühlung der erstarrten Schmelze mit Öl bis zu einer Temperatur von annähernd 300 °C und danach mit Wasser und/oder Luft bis auf zumindest annähernd Raumtemperatur durchgeführt. Es kann aber auch anders gekühlt werden. Vorzugsweise erfolgt als nach dem Gießen eine Zwangskühlung der Legierung bzw. des Verbundmaterials.

Nach der gegebenenfalls stattfindenden Umformung, beispielsweise in eine Halbschalenform, sowie gegebenenfalls abschließende Bearbeitungen, wie z.B. Feinbohren, Beschichten, etc., ist das Mehrschichtgleitlagerelement 1 fertig. Diese finalen Bearbeitungsschritte sind dem Gleitlagerfachmann bekannt, sodass dazu auf die einschlägige Literatur verwiesen sei.

Nach einer Ausführungsvariante des Verfahrens wird die Kupferbasislegierung nach dem Gießen umgeformt, insbesondere gewalzt, wobei ein Umformungsgrad von maximal 80 %, insbesondere zwischen 20 % und 80 %, angewandt wird.

Nach dem Umformen, insbesondere Walzen, kann die Kupferbasislegierung einer Wärmebehandlung unterzogen werden. Diese kann generell bei einer Temperatur zwischen 200 °C und 700 °C erfolgen. Die Wärmebehandlung kann in reduzierender Atmosphäre durchgeführt werden, beispielsweise unter einem Formiergas. Weiter kann die Wärmebehandlung für eine Zeitspanne von 2 Stunde bis 20 Stunden durchgeführt werden. Durch die in der Schicht 4 vorliegenden feinen Eisenphosphid-Partikel kommt es nicht zu einer starken Kornvergröberung während der Wärmebehandlung.

Neben der Ausbildung der weiteren Schicht 4 als Gleitschicht 9 kann diese auch eine andere Schicht im Mehrschichtgleitlagerelement 1 bilden, beispielsweise eine Lagermetallschicht, die zwischen einer Gleitschicht und einer Stützmetallschicht angeordnet ist, oder eine Einlaufschicht, die auf einer Gleitschicht angeordnet ist.

Im Folgenden sind einige der durchgeführten Versuche wiedergegeben.

Generell wurden die in Tabelle 2 angegebenen Zusammensetzungen für die Kupferbasislegierungen nach folgendem Verfahren hergestellt.

Die Kupferbasislegierung wurde auf eine Stützmetallschicht 3 aus einem Stahl mit dem Abmessungen 220 mm Breite und 4 mm Dicke mittels Bandguss aufgegossen. Dabei hatte der vorgewärmte Stahl eine Temperatur von 1070 °C und eine Geschwindigkeit von 2,5 m/min. Auf diesen wird die Gusslegierung mit einer Temperatur von ca. 1130 °C aufgegossen. Der Stahl wird mittels Ölkühlung von unten auf ca. 350 °C gekühlt und danach mit Wasser weiter abgekühlt, sodass die Gusslegierung im Verbund erstarrt. Dieser Verbund wurde einer Dickenreduktion von 40 % durch Walzen unterzogen. Danach wurde dieses Material für 7 Stunden bei 525 °C unter Schutzgasatmosphäre wärmebehandelt und anschließend in die Halbschalenform umgeformt.

Je nach Legierungszusammensetzung kann die Wärmebehandlung des Materials beispielsweise auch mit 450 °C, insbesondere 500 °C, für zehn Stunden bis 630 °C, insbesondere 610 °C, für sechs Stunden durchgeführt werden.

Es entstanden damit Zweischichtgleitlagerelemente in Halbschalenform mit einer Schichtdicke der Gleitschicht 9 von kleiner 1 mm.

Hinsichtlich der nachfolgenden Tabelle 2 sei darauf hingewiesen, dass wiederum sämtliche Angaben zur Zusammensetzung in Gew.-% zu verstehen sind, und dass den Rest auf 100 Gew.-% jeweils Kupfer bildet. Übliche herstellungsbedingte Verunreinigungen der Metalle sind nicht extra ausgewiesen. Es handelt sich hierbei lediglich um Ausführungsbeispiele im Rahmen der voranstehenden, in Tabelle 1 wiedergegebenen Mengenbereiche für die einzelnen Legierungsbestandteile. Sollte dabei zu einzelnen Bestandteilen bzw. Elementen der Kupferbasislegierung nicht der gesamte in Tabelle 1 angegebene Bereich mit Beispielen belegt sein, bedeutet dies keine Einschränkung auf die in Tabelle 2 für dieses Element wiedergegebenen punktuellen Anteile. Die in Tabelle 2 angegebenen Mengenangaben zu den Elementen sind jene die zur Herstellung der Kupferbasislegierung eingesetzt wurden.

In Hinblick auf Legierung mit Legierungselementen der zweiten Gruppe wurde immer nur zwei "Basislegierungen" verwendet. Dies bedeutet jedoch nicht, dass die Zugabe dieser Elemente auf die angegebene Zusammensetzung dieser "Basislegierungen" beschränkt ist.

Weiter wurde jeweils immer nur eines der Legierungselemente der zweiten Gruppe der "Basislegierung" zulegiert. Es versteht sich aber von selbst, dass im Rahmen der Erfindung auch Zusammensetzungen mit mehr als einem dieser Legierungselemente der zweiten Gruppe möglich sind.

**Tabelle 2: Beispielzusammensetzungen für Kupferbasislegierungen.**

| Nr. | S | Fe | P | Zn | Sn | Al | Mn | Ni | Si | Cr | In | Sonstige | |
|---|---|---|---|---|---|---|---|---|---|---|---|---|---|
| 1 | 0,1 | 0,2 | 0,01 | 45 | | 7,5 | 0,01 | 1,9 | | | | | |
| 2 | 3 | 3,8 | 2 | 9 | 15 | 0,001 | 7,5 | | 2,76 | 0,001 | | | |
| 3 | 0,3 | 1,5 | 0,5 | | 40 | 4,5 | 0,75 | | | 1,5 | 0,01 | | |
| 4 | 1,5 | 2 | 0,45 | 5 | | | | | 4,9 | 2 | 9,8 | | |
| 5 | 0,8 | 1,1 | 0,1 | 3,5 | | 10 | 1,25 | 4,5 | | 0,45 | | | |
| 6 | 0,1 | 0,01 | 0,001 | | 25 | | | | | | 0,01 | | |
| 7 | 3 | 4 | 2 | | | 15 | | | | | 10 | | |
| 8 | 0,3 | 0,35 | 0,5 | | 10 | | 9,1 | | | | 0,001 | | |
| 9 | 1,5 | 1,8 | 0,45 | | 12,1 | | | 10 | | | 7 | | |
| 10 | 0,8 | 1,5 | 0,01 | 0,35 | 0,5 | | | | 7 | 0,2 | 3 | | |
| 11 | 0,21 | 1 | 0,01 | 12 | | 3,2 | 2,5 | 1,5 | | | | | |
| 12 | 2,8 | 0,25 | 0,1 | | | 15 | 5 | | 3,8 | 0,65 | | | |
| 13 | 0,3 | 0,54 | 0,25 | | | | 7,4 | 2 | | | 10 | | |
| 14 | 1,2 | 1,2 | 0,55 | | | 8,7 | | 1,8 | 0,05 | 1,2 | 6,5 | | |
| 15 | 0,6 | 1,8 | 0,76 | | | | | | | | 0,01 | | |
| 16 | 0,4 | 0,7 | 0,02 | 1,2 | 2 | 5,5 | 2,3 | 0,03 | 0,03 | 0,03 | | | |
| 17 | 2,7 | 3,1 | 1,9 | 45 | | | | | | | | | |
| 18 | 2,7 | 1,6 | 0,6 | | 40 | | | | | | | | |
| 19 | 1,5 | 0,05 | 0,45 | | | | | | | | 8,8 | | |
| 20 | 0,75 | 0,45 | 0,09 | | | 7,7 | | | | | | | |
| 21 | 0,1 | 0,2 | 0,005 | | | | 10 | | | | | | |
| 22 | 2 | 2,9 | 2 | | | | | 5 | | | | | |
| 23 | 1,11 | 2,7 | 0,8 | | | | | | 4,4 | | | | |
| 24 | 0,7 | 0,9 | 0,44 | | | | | | | 1 | | | |
| 25 | 0,8 | 0,3 | 0,1 | 12,1 | | 4,1 | | 9,8 | | | 7,5 | | |
| 26 | 0,7 | 0,25 | 0,01 | 30 | | | | | 1 | | | | |
| 27 | 1,33 | 1 | 0,45 | | 5 | | | | | | | | |
| 28 | 0,8 | 0,54 | 0,1 | 11,5 | | | | | 1,1 | | | | |
| 29 | 0,1 | 1,2 | 0,001 | 8 | 3,3 | | | | | | | | |
| 30 | 1,2 | 1,5 | 0,2 | | 5,8 | | | | 6,2 | | | | |
| 31 | 0,6 | 0,35 | 0,01 | | | | | 1,9 | 2 | | | | |
| 32 | 1,21 | 1,8 | 0,01 | 35 | | 1 | 2,2 | | 0,9 | | | | |
| 33 | 1,6 | 0,1 | 0,1 | | 4 | | | 2,2 | | | | | |
| 34 | 0,7 | 1,5 | 0,1 | 5 | | 1,8 | 5 | 0,01 | 0,2 | 0,01 | 7 | Ag | 1,5 |
| 35 | 0,8 | 1,5 | 0,1 | | 10 | 4,35 | 7 | | 2,8 | 1,2 | 3 | Ag | 1,5 |
| 36 | 0,8 | 1,5 | 0,1 | 5 | | 1,8 | 5 | 0,01 | 0,2 | 0,01 | 7 | Ag | 1 |
| 37 | 0,8 | 1,5 | 0,1 | | 10 | 4,35 | 7 | | 2,8 | 1,2 | 3 | Ag | 1 |
| 38 | 0,8 | 1,5 | 0,1 | 5 | | 1,8 | 5 | 0,01 | 0,2 | 0,01 | 7 | Ag | 0,1 |
| 39 | 0,8 | 1,5 | 0,1 | | 10 | 4,35 | 7 | | 2,8 | 1,2 | 3 | Ag | 0,1 |
| 40 | 0,8 | 1,5 | 0,1 | 5 | | 1,8 | 5 | 0,01 | 0,2 | 0,01 | 7 | Ag | 0,001 |
| 41 | 0,8 | 1,5 | 0,1 | | 10 | 4,35 | 7 | | 2,8 | 1,2 | 3 | Ag | 0,001 |
| 42 | 0,8 | 1,5 | 0,1 | 5 | | 1,8 | 5 | 0,01 | 0,2 | 0,01 | 7 | Mg | 1,5 |
| 43 | 0,8 | 1,5 | 0,1 | | 10 | 4,35 | 7 | | 2,8 | 1,2 | 3 | Mg | 1,5 |
| 44 | 0,8 | 1,5 | 0,1 | 5 | | 1,8 | 5 | 0,01 | 0,2 | 0,01 | 7 | Mg | 1 |
| 45 | 0,8 | 1,5 | 0,1 | | 10 | 4,35 | 7 | | 2,8 | 1,2 | 3 | Mg | 1 |
| 46 | 0,8 | 1,5 | 0,1 | 5 | | 1,8 | 5 | 0,01 | 0,2 | 0,01 | 7 | Mg | 0,1 |
| 47 | 0,8 | 1,5 | 0,1 | | 10 | 4,35 | 7 | | 2,8 | 1,2 | 3 | Mg | 0,1 |
| 48 | 0,8 | 1,5 | 0,1 | 5 | | 1,8 | 5 | 0,01 | 0,2 | 0,01 | 7 | Mg | 0,001 |
| 49 | 0,8 | 1,5 | 0,1 | | 10 | 4,35 | 7 | | 2,8 | 1,2 | 3 | Mg | 0,001 |
| 50 | 0,8 | 1,5 | 0,1 | 5 | | 1,8 | 5 | 0,01 | 0,2 | 0,01 | 7 | Co | 1,5 |
| 51 | 0,8 | 1,5 | 0,1 | | 10 | 4,35 | 7 | | 2,8 | 1,2 | 3 | Co | 1,5 |
| 52 | 0,8 | 1,5 | 0,1 | 5 | | 1,8 | 5 | 0,01 | 0,2 | 0,01 | 7 | Co | 1 |
| 53 | 0,8 | 1,5 | 0,1 | | 10 | 4,35 | 7 | | 2,8 | 1,2 | 3 | Co | 1 |
| 54 | 0,8 | 1,5 | 0,1 | 5 | | 1,8 | 5 | 0,01 | 0,2 | 0,01 | 7 | Co | 0,1 |
| 55 | 0,8 | 1,5 | 0,1 | | 10 | 4,35 | 7 | | 2,8 | 1,2 | 3 | Co | 0,1 |
| 56 | 0,8 | 1,5 | 0,1 | 5 | | 1,8 | 5 | 0,01 | 0,2 | 0,01 | 7 | Co | 0,001 |
| 57 | 0,8 | 1,5 | 0,1 | | 10 | 4,35 | 7 | | 2,8 | 1,2 | 3 | Co | 0,001 |
| 58 | 0,8 | 1,5 | 0,1 | 5 | | 1,8 | 5 | 0,01 | 0,2 | 0,01 | 7 | Ti | 1,5 |
| 59 | 0,8 | 1,5 | 0,1 | | 10 | 4,35 | 7 | | 2,8 | 1,2 | 3 | Ti | 1,5 |
| 60 | 0,8 | 1,5 | 0,1 | 5 | | 1,8 | 5 | 0,01 | 0,2 | 0,01 | 7 | Ti | 1 |
| 61 | 0,8 | 1,5 | 0,1 | | 10 | 4,35 | 7 | | 2,8 | 1,2 | 3 | Ti | 1 |
| 62 | 0,8 | 1,5 | 0,1 | 5 | | 1,8 | 5 | 0,01 | 0,2 | 0,01 | 7 | Ti | 0,1 |
| 63 | 0,8 | 1,5 | 0,1 | | 10 | 4,35 | 7 | | 2,8 | 1,2 | 3 | Ti | 0,1 |
| 64 | 0,8 | 1,5 | 0,1 | 5 | | 1,8 | 5 | 0,01 | 0,2 | 0,01 | 7 | Ti | 0,001 |
| 65 | 0,8 | 1,5 | 0,1 | | 10 | 4,35 | 7 | | 2,8 | 1,2 | 3 | Ti | 0,001 |
| 66 | 0,8 | 1,5 | 0,1 | 5 | | 1,8 | 5 | 0,01 | 0,2 | 0,01 | 7 | Zr | 1,5 |
| 67 | 0,8 | 1,5 | 0,1 | | 10 | 4,35 | 7 | | 2,8 | 1,2 | 3 | Zr | 1,5 |
| 68 | 0,8 | 1,5 | 0,1 | 5 | | 1,8 | 5 | 0,01 | 0,2 | 0,01 | 7 | Zr | 1 |
| 69 | 0,8 | 1,5 | 0,1 | | 10 | 4,35 | 7 | | 2,8 | 1,2 | 3 | Zr | 1 |
| 70 | 0,8 | 1,5 | 0,1 | 5 | | 1,8 | 5 | 0,01 | 0,2 | 0,01 | 7 | Zr | 0,1 |
| 71 | 0,8 | 1,5 | 0,1 | | 10 | 4,35 | 7 | | 2,8 | 1,2 | 3 | Zr | 0,1 |
| 72 | 0,8 | 1,5 | 0,1 | 5 | | 1,8 | 5 | 0,01 | 0,2 | 0,01 | 7 | Zr | 0,001 |
| 73 | 0,8 | 1,5 | 0,1 | | 10 | 4,35 | 7 | | 2,8 | 1,2 | 3 | Zr | 0,001 |
| 74 | 0,8 | 1,5 | 0,1 | 5 | | 1,8 | 5 | 0,01 | 0,2 | 0,01 | 7 | As | 1,5 |
| 75 | 0,8 | 1,5 | 0,1 | | 10 | 4,35 | 7 | | 2,8 | 1,2 | 3 | As | 1,5 |
| 76 | 0,8 | 1,5 | 0,1 | 5 | | 1,8 | 5 | 0,01 | 0,2 | 0,01 | 7 | As | 1 |
| 77 | 0,8 | 1,5 | 0,1 | | 10 | 4,35 | 7 | | 2,8 | 1,2 | 3 | As | 1 |
| 78 | 0,8 | 1,5 | 0,1 | 5 | | 1,8 | 5 | 0,01 | 0,2 | 0,01 | 7 | As | 0,1 |
| 79 | 0,8 | 1,5 | 0,1 | | 10 | 4,35 | 7 | | 2,8 | 1,2 | 3 | As | 0,1 |
| 80 | 0,8 | 1,5 | 0,1 | 5 | | 1,8 | 5 | 0,01 | 0,2 | 0,01 | 7 | As | 0,001 |
| 81 | 0,8 | 1,5 | 0,1 | | 10 | 4,35 | 7 | | 2,8 | 1,2 | 3 | As | 0,001 |
| 82 | 0,8 | 1,5 | 0,1 | 5 | | 1,8 | 5 | 0,01 | 0,2 | 0,01 | 7 | Li | 1,5 |
| 83 | 0,8 | 1,5 | 0,1 | | 10 | 4,35 | 7 | | 2,8 | 1,2 | 3 | Li | 1,5 |
| 84 | 0,8 | 1,5 | 0,1 | 5 | | 1,8 | 5 | 0,01 | 0,2 | 0,01 | 7 | Li | 1 |
| 85 | 0,8 | 1,5 | 0,1 | | 10 | 4,35 | 7 | | 2,8 | 1,2 | 3 | Li | 1 |
| 86 | 0,8 | 1,5 | 0,1 | 5 | | 1,8 | 5 | 0,01 | 0,2 | 0,01 | 7 | Li | 0,1 |
| 87 | 0,8 | 1,5 | 0,1 | | 10 | 4,35 | 7 | | 2,8 | 1,2 | 3 | Li | 0,1 |
| 88 | 0,8 | 1,5 | 0,1 | 5 | | 1,8 | 5 | 0,01 | 0,2 | 0,01 | 7 | Li | 0,001 |
| 89 | 0,8 | 1,5 | 0,1 | | 10 | 4,35 | 7 | | 2,8 | 1,2 | 3 | Li | 0,001 |
| 90 | 0,8 | 1,5 | 0,1 | 5 | | 1,8 | 5 | 0,01 | 0,2 | 0,01 | 7 | Y | 1,5 |
| 91 | 0,8 | 1,5 | 0,1 | | 10 | 4,35 | 7 | | 2,8 | 1,2 | 3 | Y | 1,5 |
| 92 | 0,8 | 1,5 | 0,1 | 5 | | 1,8 | 5 | 0,01 | 0,2 | 0,01 | 7 | Y | 1 |
| 93 | 0,8 | 1,5 | 0,1 | | 10 | 4,35 | 7 | | 2,8 | 1,2 | 3 | Y | 1 |
| 94 | 0,8 | 1,5 | 0,1 | 5 | | 1,8 | 5 | 0,01 | 0,2 | 0,01 | 7 | Y | 0,1 |
| 95 | 0,8 | 1,5 | 0,1 | | 10 | 4,35 | 7 | | 2,8 | 1,2 | 3 | Y | 0,1 |
| 96 | 0,8 | 1,5 | 0,1 | 5 | | 1,8 | 5 | 0,01 | 0,2 | 0,01 | 7 | Y | 0,001 |
| 97 | 0,8 | 1,5 | 0,1 | | 10 | 4,35 | 7 | | 2,8 | 1,2 | 3 | Y | 0,001 |
| 98 | 0,8 | 1,5 | 0,1 | 5 | | 1,8 | 5 | 0,01 | 0,2 | 0,01 | 7 | Ca | 1,5 |
| 99 | 0,8 | 1,5 | 0,1 | | 10 | 4,35 | 7 | | 2,8 | 1,2 | 3 | Ca | 1,5 |
| 100 | 0,8 | 1,5 | 0,1 | 5 | | 1,8 | 5 | 0,01 | 0,2 | 0,01 | 7 | Ca | 1 |
| 101 | 0,8 | 1,5 | 0,1 | | 10 | 4,35 | 7 | | 2,8 | 1,2 | 3 | Ca | 1 |
| 102 | 0,8 | 1,5 | 0,1 | 5 | | 1,8 | 5 | 0,01 | 0,2 | 0,01 | 7 | Ca | 0,1 |
| 103 | 0,8 | 1,5 | 0,1 | | 10 | 4,35 | 7 | | 2,8 | 1,2 | 3 | Ca | 0,1 |
| 104 | 0,8 | 1,5 | 0,1 | 5 | | 1,8 | 5 | 0,01 | 0,2 | 0,01 | 7 | Ca | 0,001 |
| 105 | 0,8 | 1,5 | 0,1 | | 10 | 4,35 | 7 | | 2,8 | 1,2 | 3 | Ca | 0,001 |
| 106 | 0,8 | 1,5 | 0,1 | 5 | | 1,8 | 5 | 0,01 | 0,2 | 0,01 | 7 | V | 1,5 |
| 107 | 0,8 | 1,5 | 0,1 | | 10 | 4,35 | 7 | | 2,8 | 1,2 | 3 | V | 1,5 |
| 108 | 0,8 | 1,5 | 0,1 | 5 | | 1,8 | 5 | 0,01 | 0,2 | 0,01 | 7 | V | 1 |
| 109 | 0,8 | 1,5 | 0,1 | | 10 | 4,35 | 7 | | 2,8 | 1,2 | 3 | V | 1 |
| 110 | 0,8 | 1,5 | 0,1 | 5 | | 1,8 | 5 | 0,01 | 0,2 | 0,01 | 7 | V | 0,1 |
| 111 | 0,8 | 1,5 | 0,1 | | 10 | 4,35 | 7 | | 2,8 | 1,2 | 3 | V | 0,1 |
| 112 | 0,8 | 1,5 | 0,1 | 5 | | 1,8 | 5 | 0,01 | 0,2 | 0,01 | 7 | V | 0,001 |
| 113 | 0,8 | 1,5 | 0,1 | | 10 | 4,35 | 7 | | 2,8 | 1,2 | 3 | V | 0,001 |
| 114 | 0,8 | 1,5 | 0,1 | 5 | | 1,8 | 5 | 0,01 | 0,2 | 0,01 | 7 | Mo | 1,5 |
| 115 | 0,8 | 1,5 | 0,1 | | 10 | 4,35 | 7 | | 2,8 | 1,2 | 3 | Mo | 1,5 |
| 116 | 0,8 | 1,5 | 0,1 | 5 | | 1,8 | 5 | 0,01 | 0,2 | 0,01 | 7 | Mo | 1 |
| 117 | 0,8 | 1,5 | 0,1 | | 10 | 4,35 | 7 | | 2,8 | 1,2 | 3 | Mo | 1 |
| 118 | 0,8 | 1,5 | 0,1 | 5 | | 1,8 | 5 | 0,01 | 0,2 | 0,01 | 7 | Mo | 0,1 |
| 119 | 0,8 | 1,5 | 0,1 | | 10 | 4,35 | 7 | | 2,8 | 1,2 | 3 | Mo | 0,1 |
| 120 | 0,8 | 1,5 | 0,1 | 5 | | 1,8 | 5 | 0,01 | 0,2 | 0,01 | 7 | Mo | 0,001 |
| 121 | 0,8 | 1,5 | 0,1 | | 10 | 4,35 | 7 | | 2,8 | 1,2 | 3 | Mo | 0,001 |
| 122 | 0,8 | 1,5 | 0,1 | 5 | | 1,8 | 5 | 0,01 | 0,2 | 0,01 | 7 | W | 1,5 |
| 123 | 0,8 | 1,5 | 0,1 | | 10 | 4,35 | 7 | | 2,8 | 1,2 | 3 | W | 1,5 |
| 124 | 0,8 | 1,5 | 0,1 | 5 | | 1,8 | 5 | 0,01 | 0,2 | 0,01 | 7 | W | 1 |
| 125 | 0,8 | 1,5 | 0,1 | | 10 | 4,35 | 7 | | 2,8 | 1,2 | 3 | W | 1 |
| 126 | 0,8 | 1,5 | 0,1 | 5 | | 1,8 | 5 | 0,01 | 0,2 | 0,01 | 7 | W | 0,1 |
| 127 | 0,8 | 1,5 | 0,1 | | 10 | 4,35 | 7 | | 2,8 | 1,2 | 3 | W | 0,1 |
| 128 | 0,8 | 1,5 | 0,1 | 5 | | 1,8 | 5 | 0,01 | 0,2 | 0,01 | 7 | W | 0,001 |
| 129 | 0,8 | 1,5 | 0,1 | | 10 | 4,35 | 7 | | 2,8 | 1,2 | 3 | W | 0,001 |
| 130 | 0,8 | 1,5 | 0,1 | 5 | | 1,8 | 5 | 0,01 | 0,2 | 0,01 | 7 | Sb | 1,5 |
| 131 | 0,8 | 1,5 | 0,1 | | 10 | 4,35 | 7 | | 2,8 | 1,2 | 3 | Sb | 1,5 |
| 132 | 0,8 | 1,5 | 0,1 | 5 | | 1,8 | 5 | 0,01 | 0,2 | 0,01 | 7 | Sb | 1 |
| 133 | 0,8 | 1,5 | 0,1 | | 10 | 4,35 | 7 | | 2,8 | 1,2 | 3 | Sb | 1 |
| 134 | 0,8 | 1,5 | 0,1 | 5 | | 1,8 | 5 | 0,01 | 0,2 | 0,01 | 7 | Sb | 0,1 |
| 135 | 0,8 | 1,5 | 0,1 | | 10 | 4,35 | 7 | | 2,8 | 1,2 | 3 | Sb | 0,1 |
| 136 | 0,8 | 1,5 | 0,1 | 5 | | 1,8 | 5 | 0,01 | 0,2 | 0,01 | 7 | Sb | 0,001 |
| 137 | 0,8 | 1,5 | 0,1 | | 10 | 4,35 | 7 | | 2,8 | 1,2 | 3 | Sb | 0,001 |
| 138 | 0,8 | 1,5 | 0,1 | 5 | | 1,8 | 5 | 0,01 | 0,2 | 0,01 | 7 | Se | 1,5 |
| 139 | 0,8 | 1,5 | 0,1 | | 10 | 4,35 | 7 | | 2,8 | 1,2 | 3 | Se | 1,5 |
| 140 | 0,8 | 1,5 | 0,1 | 5 | | 1,8 | 5 | 0,01 | 0,2 | 0,01 | 7 | Se | 1 |
| 141 | 0,8 | 1,5 | 0,1 | | 10 | 4,35 | 7 | | 2,8 | 1,2 | 3 | Se | 1 |
| 142 | 0,8 | 1,5 | 0,1 | 5 | | 1,8 | 5 | 0,01 | 0,2 | 0,01 | 7 | Se | 0,1 |
| 143 | 0,8 | 1,5 | 0,1 | | 10 | 4,35 | 7 | | 2,8 | 1,2 | 3 | Se | 0,1 |
| 144 | 0,8 | 1,5 | 0,1 | 5 | | 1,8 | 5 | 0,01 | 0,2 | 0,01 | 7 | Se | 0,001 |
| 145 | 0,8 | 1,5 | 0,1 | | 10 | 4,35 | 7 | | 2,8 | 1,2 | 3 | Se | 0,001 |
| 146 | 0,8 | 1,5 | 0,1 | 5 | | 1,8 | 5 | 0,01 | 0,2 | 0,01 | 7 | Te | 1,5 |
| 147 | 0,8 | 1,5 | 0,1 | | 10 | 4,35 | 7 | | 2,8 | 1,2 | 3 | Te | 1,5 |
| 148 | 0,8 | 1,5 | 0,1 | 5 | | 1,8 | 5 | 0,01 | 0,2 | 0,01 | 7 | Te | 1 |
| 149 | 0,8 | 1,5 | 0,1 | | 10 | 4,35 | 7 | | 2,8 | 1,2 | 3 | Te | 1 |
| 150 | 0,8 | 1,5 | 0,1 | 5 | | 1,8 | 5 | 0,01 | 0,2 | 0,01 | 7 | Te | 0,1 |
| 151 | 0,8 | 1,5 | 0,1 | | 10 | 4,35 | 7 | | 2,8 | 1,2 | 3 | Te | 0,1 |
| 152 | 0,8 | 1,5 | 0,1 | 5 | | 1,8 | 5 | 0,01 | 0,2 | 0,01 | 7 | Te | 0,001 |
| 153 | 0,8 | 1,5 | 0,1 | | 10 | 4,35 | 7 | | 2,8 | 1,2 | 3 | Te | 0,001 |
| 154 | 0,8 | 1,5 | 0,1 | 5 | | 1,8 | 5 | 0,01 | 0,2 | 0,01 | 7 | Bi | 1,5 |
| 155 | 0,8 | 1,5 | 0,1 | | 10 | 4,35 | 7 | | 2,8 | 1,2 | 3 | Bi | 1,5 |
| 156 | 0,8 | 1,5 | 0,1 | 5 | | 1,8 | 5 | 0,01 | 0,2 | 0,01 | 7 | Bi | 1 |
| 157 | 0,8 | 1,5 | 0,1 | | 10 | 4,35 | 7 | | 2,8 | 1,2 | 3 | Bi | 1 |
| 158 | 0,8 | 1,5 | 0,1 | 5 | | 1,8 | 5 | 0,01 | 0,2 | 0,01 | 7 | Bi | 0,1 |
| 159 | 0,8 | 1,5 | 0,1 | | 10 | 4,35 | 7 | | 2,8 | 1,2 | 3 | Bi | 0,1 |
| 160 | 0,8 | 1,5 | 0,1 | 5 | | 1,8 | 5 | 0,01 | 0,2 | 0,01 | 7 | Bi | 0,001 |
| 161 | 0,8 | 1,5 | 0,1 | | 10 | 4,35 | 7 | | 2,8 | 1,2 | 3 | Bi | 0,001 |
| 162 | 0,8 | 1,5 | 0,1 | 5 | | 1,8 | 5 | 0,01 | 0,2 | 0,01 | 7 | B | 1,5 |
| 163 | 0,8 | 1,5 | 0,1 | | 10 | 4,35 | 7 | | 2,8 | 1,2 | 3 | B | 1,5 |
| 164 | 0,8 | 1,5 | 0,1 | 5 | | 1,8 | 5 | 0,01 | 0,2 | 0,01 | 7 | B | 1 |
| 165 | 0,8 | 1,5 | 0,1 | | 10 | 4,35 | 7 | | 2,8 | 1,2 | 3 | B | 1 |
| 166 | 0,8 | 1,5 | 0,1 | 5 | | 1,8 | 5 | 0,01 | 0,2 | 0,01 | 7 | B | 0,001 |
| 167 | 0,8 | 1,5 | 0,1 | | 10 | 4,35 | 7 | | 2,8 | 1,2 | 3 | B | 0,001 |
| 168 | 0,8 | 1,5 | 0,1 | 5 | | 1,8 | 5 | 0,01 | 0,2 | 0,01 | 7 | Nb | 1,5 |
| 169 | 0,8 | 1,5 | 0,1 | | 10 | 4,35 | 7 | | 2,8 | 1,2 | 3 | Nb | 1,5 |
| 170 | 0,8 | 1,5 | 0,1 | 5 | | 1,8 | 5 | 0,01 | 0,2 | 0,01 | 7 | Nb | 1 |
| 171 | 0,8 | 1,5 | 0,1 | | 10 | 4,35 | 7 | | 2,8 | 1,2 | 3 | Nb | 1 |
| 172 | 0,8 | 1,5 | 0,1 | 5 | | 1,8 | 5 | 0,01 | 0,2 | 0,01 | 7 | Nb | 0,1 |
| 173 | 0,8 | 1,5 | 0,1 | | 10 | 4,35 | 7 | | 2,8 | 1,2 | 3 | Nb | 0,1 |
| 174 | 0,8 | 1,5 | 0,1 | 5 | | 1,8 | 5 | 0,01 | 0,2 | 0,01 | 7 | Nb | 0,001 |
| 175 | 0,8 | 1,5 | 0,1 | | 10 | 4,35 | 7 | | 2,8 | 1,2 | 3 | Nb | 0,001 |
| 176 | 0,8 | 1,5 | 0,1 | 5 | | 1,8 | 5 | 0,01 | 0,2 | 0,01 | 7 | Pd | 1,5 |
| 177 | 0,8 | 1,5 | 0,1 | | 10 | 4,35 | 7 | | 2,8 | 1,2 | 3 | Pd | 1,5 |
| 178 | 0,8 | 1,5 | 0,1 | 5 | | 1,8 | 5 | 0,01 | 0,2 | 0,01 | 7 | Pd | 1 |
| 179 | 0,8 | 1,5 | 0,1 | | 10 | 4,35 | 7 | | 2,8 | 1,2 | 3 | Pd | 1 |
| 180 | 0,8 | 1,5 | 0,1 | 5 | | 1,8 | 5 | 0,01 | 0,2 | 0,01 | 7 | Pd | 0,1 |
| 181 | 0,8 | 1,5 | 0,1 | | 10 | 4,35 | 7 | | 2,8 | 1,2 | 3 | Pd | 0,1 |
| 182 | 0,8 | 1,5 | 0,1 | 5 | | 1,8 | 5 | 0,01 | 0,2 | 0,01 | 7 | Pd | 0,001 |
| 183 | 0,8 | 1,5 | 0,1 | | 10 | 4,35 | 7 | | 2,8 | 1,2 | 3 | Pd | 0,001 |

Die Bestimmung der Fressneigung dieser Kupferbasislegierung erfolgte nach einem Fressneigungstest, dem alle Mehrschichtgleitlagerelemente 1 entsprechend den Beispielen in Tabelle 2 unterzogen wurden. Die Messwerte wurden auf ein Mehrschichtgleitlagerelement einer bekannten Legierung aus CuPb22Sn normiert. Diese Legierung wurde mit Fresslast 100 % definiert. Im Vergleich dazu wiesen die Legierungen nach Tabelle 2 Werte zwischen 70 % und 105 % auf, was in Hinblick auf die Bleifreiheit nicht nur sehr gute Werte sind sondern die bleihältige Legierung sogar noch übertreffen.

In weiteren Tests konnte festgestellt werden, dass es mit der Zugabe von Bor möglich ist, die Härte der Kupferbasislegierung im Zusammenspiel mit der Abkühlung der Schmelze in bestimmten Grenzen einzustellen. So können bei einer raschen Abkühlung Borphasen im Grenzbereich zum Stahl der Stützmetallschicht 3 ausgeschieden werden, wodurch die Änderung der mechanischen Eigenschaften am Übergang von der weiteren Schicht 4 auf die Stützmetallschicht 3 eingestellt werden kann. Mit einer im Vergleich dazu langsameren Abkühlung der Schmelze kann die Kupferbasislegierung hingegen weicher eingestellt werden. Alternativ oder zusätzlich dazu kann auch über den Mengenanteil an Bor in der Kupferbasislegierung die Ausscheidung dieser Borphasen im Grenzbereich zum Stahl der Stützmetallschicht 3 beeinflusst werden. Selbstverständlich können Borphasen auch in der gesamten weiteren Schicht 4 enthalten sein.

Es ist mit dieser Ausführungsvariante möglich, einen Härtegradient in der weiteren Schicht 4 und in weiterer Folge im Mehrschichtgleichlagerelement 1 bereits durch die Herstellung, d.h. während der und durch die Erstarrung, der Kupferbasislegierung (Aufgießen auf die unter der weiteren Schicht 4 angeordneten Schicht) herzustellen. Es sind also keine weiteren Nachbearbeitung für die Herstellung dieses Härtegradienten notwendig.

Durch den Härtegradienten nimmt die Härte von der Bindezone, also dem Grenzbereich zum Stahl der Stützmetallschicht 3 oder der unter der weiteren Schicht 4 angeordneten Schicht in Richtung auf die (in radialer Richtung) gegenüberliegende Oberfläche der weiteren Schicht 4 ab. Dadurch kann im Bereich der Gleitfläche eine niedrige Härte vorliegen, die eine bessere Anpassungsfähigkeit der weiteren Schicht 4 bewirkt. Andererseits kann durch die im Vergleich dazu höhere Härte in der Bindezone ein sprunghafter Härteübergang zur Stützmetallschicht 3 oder der unter der weiteren Schicht 4 angeordneten Schicht vermieden werden, wodurch mechanische Spannungen besser vermieden bzw. reduziert werden können. Dies wiederum verbessert die Dauerfestigkeit bzw. die Lebensdauer des Mehrschichtgleitlagerelementes 1.

Die Konzentration der Borphasen nimmt also von der (radial) inneren Oberfläche der weiteren Schicht 4 in Richtung auf die Stützmetallschicht 3 oder die unterhalb der weiteren Schicht 4 angeordneten Schicht des Mehrschichtgleitlagerelementes 1 zu, wobei die Konzentration der Borphasen in der Bindezone am Übergang zur Stützmetallschicht 3 oder die unterhalb der weiteren Schicht 4 angeordneten Schicht des Mehrschichtgleitlagerelementes 1 am größten ist.

Bevorzugt wird zur Ausbildung des Härtegradienten in der weiteren Schicht 4 die Kupferbasislegierung mit einem Schleudergussverfahren auf die Stützmetallschicht 3 oder der unter der weiteren Schicht 4 angeordneten Schicht aufgebracht. Es sind aber auch andere Verfahren möglich, beispielsweise ein Bandgussverfahren.

Bei den Borphasen handelt es sich überwiegend um Eisen-Borphasen. Es können aber auch andere Borphasen mit Legierungselementen der Kupferbasislegierung gebildet werden. Die Borphasen können generell auch in anderen Bereichen der Kupferbasislegierung auftreten.

Es ist bei dem Mehrschichtgleitlagerelement 1 möglich, tribologisch günstige Schichten weiter auszubauen. So können beispielsweise Sulfid-Depots in die oberste Schicht eingebaut werden. Bei der Ausbildung dieser Depots wirkt Bor unterstützend.

Die Erfindung betrifft weiter ein Verfahren zur Herstellung eines Mehrschichtgleitlagerelementes 1, wofür ein Verbundwerkstoff umfassend eine Stützmetallschicht 3 und eine weitere Schicht 4, insbesondere eine Gleitschicht 9, sowie gegebenenfalls eine Zwischenschicht zwischen der Stützmetallschicht 3 und der weiteren Schicht 4, hergestellt wird. Die weitere Schicht 4 wird aus einer Gusslegierung aus einer bleifreien Kupferbasislegierung gebildet, in der sulfidische Ausscheidungen 10 enthalten sind. Zur Herstellung der Gusslegierung werden zwischen 0,1 Gew.-% und 3 Gew.-% Schwefel, zwischen 0,01 Gew.-% und 4 Gew.-% Eisen, zwischen 0 Gew.-%, insbesondere 0,001 Gew.-%, und 2 Gew.-% Phosphor , zumindest ein Element aus einer ersten Gruppe bestehend aus Zink, Zinn, Aluminium, Mangan, Nickel, Silizium, Chrom, Indium von in Summe zwischen 0,1 Gew.-% und 49 Gew.-%, wobei der Anteil an Zink zwischen 0 Gew.-% und 45 Gew.-% beträgt, der Anteil an Zinn zwischen 0 Gew.-% und 40 Gew.-% beträgt, der Anteil an Aluminium zwischen 0 Gew.-% und 15 Gew.-% beträgt, der Anteil an Mangan zwischen 0 Gew.-% und 10 Gew.-% beträgt, der Anteil an Nickel zwischen 0 Gew.-% und 10 Gew.-% beträgt, der Anteil an Silizium zwischen 0 Gew.-% und 10 Gew.-% beträgt, der Anteil an Chrom zwischen 0 Gew.-% und 2 Gew.-% beträgt und der Anteil an Indium zwischen 0 Gew.-% und 10 Gew.-% beträgt, und zumindest ein Element aus einer zweiten Gruppe bestehend aus Silber, Magnesium, Indium, Kobalt, Titan, Zirkonium, Arsen, Lithium, Yttrium, Calcium, Vanadium, Molybdän, Wolfram, Antimon, Selen, Tellur, Bismut, Niob, Palladium in einem Anteil von jeweils zwischen 0 Gew.-% und 1,5 Gew.-%, wobei der Summenanteil der Elemente der zweiten Gruppe zwischen 0 Gew.-% und 2 Gew.-% beträgt, verwendet. Den Rest auf 100 Gew.-% bildet Kupfer sowie aus der Herstellung der Elemente stammende Verunreinigungen.

Zur Herstellung der Gusslegierung können auch die voranstehend in Tabelle 1 genannten weiteren Mengenangaben verwendet werden.

Die Ausführungsbeispiele zeigen bzw. beschreiben mögliche Ausführungsvarianten, wobei an dieser Stelle bemerkt sei, dass auch diverse Kombinationen der einzelnen Ausführungsvarianten untereinander möglich sind.

Der Ordnung halber sei abschließend darauf hingewiesen, dass zum besseren Verständnis des Aufbaus des Mehrschichtgleitlagerelementes 1 bzw. der weiteren Schicht 4 diese nicht zwingenderweise maßstäblich dargestellt wurden.

### Bezugszeichenliste

- 1: Mehrschichtgleitlagerelement
- 2: Gleitlagerelementkörper
- 3: Stützmetallschicht
- 4: Schicht
- 5: Lagermetallschicht
- 6: Einlaufschicht
- 7: Gleitlagerelement
- 8: Gleitlager
- 9: Gleitschicht
- 10: Ausscheidung
- 11: Gesamtschichtdicke
- 12: Teilschicht
- 13: Schichtdicke
- 14: Oberfläche
- 15: Partikeldurchmesser

## Patentansprüche

1. Mehrschichtgleitlagerelement (1) aus einem Verbundwerkstoff umfassend eine Stützmetallschicht (3) und eine weitere Schicht (4), insbesondere eine Gleitschicht (9), sowie gegebenenfalls eine Zwischenschicht zwischen der Stützmetallschicht (3) und der weiteren Schicht (4), wobei die weitere Schicht (4) aus einer Gusslegierung aus einer bleifreien Kupferbasislegierung gebildet ist, in der sulfidische Ausscheidungen (10) enthalten sind, **dadurch gekennzeichnet, dass** die Kupferbasislegierung zwischen 0,1 Gew.-% und 3 Gew.-% Schwefel, zwischen 0,01 Gew.-% und 4 Gew.-% Eisen, zwischen 0 Gew.-%, insbesondere 0,001 Gew.-%, und 2 Gew.-% Phosphor, zumindest ein Element aus einer ersten Gruppe bestehend aus Zink, Zinn, Aluminium, Mangan, Nickel, Silizium, Chrom, Indium von in Summe zwischen 0,1 Gew.-% und 49 Gew.-%, wobei der Anteil an Zink zwischen 0 Gew.-% und 45 Gew.-% beträgt, der Anteil an Zinn zwischen 0 Gew.-% und 40 Gew.-% beträgt, der Anteil an Aluminium zwischen 0 Gew.-% und 15 Gew.-% beträgt, der Anteil an Mangan zwischen 0 Gew.-% und 10 Gew.-% beträgt, der Anteil an Nickel zwischen 0 Gew.-% und 10 Gew.-% beträgt, der Anteil an Silizium zwischen 7 Gew.-% und 10 Gew.-% beträgt, der Anteil an Chrom zwischen 0 Gew.-% und 2 Gew.-% beträgt und der Anteil an Indium zwischen 0 Gew.-% und 10 Gew.-% beträgt, und zumindest ein Element aus einer zweiten Gruppe bestehend aus Silber, Magnesium, Kobalt, Titan, Zirkonium, Arsen, Lithium, Yttrium, Calcium, Vanadium, Molybdän, Wolfram, Antimon, Selen, Tellur, Bismut, Niob, Palladium in einem Anteil von jeweils zwischen 0 Gew.-% und 1,5 Gew.-%, wobei der Summenanteil der Elemente der zweiten Gruppe zwischen 0 Gew.-% und 2 Gew.-% beträgt, enthält und den Rest auf 100 Gew.-% Kupfer sowie aus der Herstellung der Elemente stammende Verunreinigungen bilden.

2. Mehrschichtgleitlagerelement (1) nach Anspruch 1, **dadurch gekennzeichnet, dass** die Kupferbasislegierung der weiteren Schicht (4) entweder Zink oder Zinn enthält.

3. Mehrschichtleitlagerelement (1) nach Anspruch 1 oder 2, **dadurch gekennzeichnet, dass** der Summenanteil der Elemente aus der ersten Gruppe bestehend aus Zink, Zinn, Aluminium, Mangan, Nickel, Silizium, Chrom zwischen 0,5 Gew.-% und 15 Gew.-% beträgt.

4. Mehrschichtleitlagerelement (1) nach einem der Ansprüche 1 bis 3, **dadurch gekennzeichnet, dass** die Kupferbasislegierung der weiteren Schicht (4) zwischen 0,01 Gew.-% und 5 Gew.-% Zink enthält.

5. Mehrschichtgleitlagerelement (1) nach einem der Ansprüche 1 bis 4, **dadurch gekennzeichnet, dass** die Kupferbasislegierung der weiteren Schicht (4) zwischen 0,01 Gew.-% und 10 Gew.-% Zinn enthält.

6. Mehrschichtleitlagerelement (1) nach einem der Ansprüche 1 bis 5, **dadurch gekennzeichnet, dass** die Kupferbasislegierung der weiteren Schicht (4) zwischen 0,01 Gew.-% und 7,5 Gew.-% Aluminium enthält.

7. Mehrschichtleitlagerelement (1) nach einem der Ansprüche 1 bis 6, **dadurch gekennzeichnet, dass** die Kupferbasislegierung der weiteren Schicht (4) zwischen 0,01 Gew.-% und 5 Gew.-% Mangan enthält.

8. Mehrschichtleitlagerelement (1) nach einem der Ansprüche 1 bis 7, **dadurch gekennzeichnet, dass** die Kupferbasislegierung der weiteren Schicht (4) zwischen 0,01 Gew.-% und 5 Gew.-%, insbesondere zwischen 0,01 Gew.-% und 2 Gew.-%, Nickel enthält.

9. Mehrschichtleitlagerelement (1) nach einem der Ansprüche 1 bis 8, **dadurch gekennzeichnet, dass** die Kupferbasislegierung der weiteren Schicht (4) zwischen 0,01 Gew.-% und 1,5 Gew.-%, insbesondere zwischen 0,01 Gew.-% und 1 Gew.-%, Chrom enthält.

10. Mehrschichtleitlagerelement (1) nach einem der Ansprüche 1 bis 9, **dadurch gekennzeichnet, dass** die Kupferbasislegierung der weiteren Schicht (4) zwischen 0,3 Gew.-% und 0,8 Gew.-% Schwefel enthält.

11. Mehrschichtleitlagerelement (1) nach einem der Ansprüche 1 bis 10, **dadurch gekennzeichnet, dass** die Kupferbasislegierung der weiteren Schicht (4) zwischen 0,01 Gew.-% und 0,1 Gew.-% Phosphor enthält.

12. Mehrschichtleitlagerelement (1) nach einem der Ansprüche 1 bis 11, **dadurch gekennzeichnet, dass** die Kupferbasislegierung der weiteren Schicht (4) zwischen 0,3 Gew.-% und 1,5 Gew.-% Eisen enthält.

13. Mehrschichtleitlagerelement (1) nach einem der Ansprüche 1 bis 12, **dadurch gekennzeichnet, dass** die sulfidischen Ausscheidungen (10) innerhalb der gesamten weiteren Schicht (4) homogen verteilt vorliegen.

14. Mehrschichtleitlagerelement (1) nach einem der Ansprüche 1 bis 12, **dadurch gekennzeichnet, dass** die sulfidischen Ausscheidungen (10) nur innerhalb einer Teilschicht (12) der Kupferbasislegierung der weiteren Schicht (4) ausgebildet sind.

15. Mehrschichtgleitlagerelement (1) nach Anspruch 14, **dadurch gekennzeichnet, dass** die Teilschicht (12) eine Schichtdicke (13) aufweist, die zwischen 5 % und 85 % der Gesamtschichtdicke (11) der weiteren Schicht (4) beträgt.

16. Mehrschichtleitlagerelement (1) nach einem der Ansprüche 1 bis 15, **dadurch gekennzeichnet, dass** die sulfidischen Ausscheidungen zu zumindest 50 Flächen-% aus einer Mischung aus Kupfersulfiden und Eisensulfiden bestehen.

17. Mehrschichtgleitlagerelement (1) nach Anspruch 16, **dadurch gekennzeichnet, dass** der Anteil an Kupfersulfiden an der Mischung aus Kupfersulfiden und Eisensulfiden zumindest 60 Flächen-% beträgt.
